# EUROPEAN PATENT APPLICATION

(11) **EP 4 836 223 A1**
(43) Date of publication of application: **04.11.2026**
(21) Application number: 23962853.0
(22) Date of filing: 29.12.2023
(51) Int. Cl.: H02J 3/32, H02J 7/00

(54) **CONTROL METHOD AND APPARATUS, ELECTRONIC DEVICE, AND STORAGE MEDIUM**

(30) Priority: 27.12.2023 CN 202311832856
(71) Applicant: Pylon Technologies Co., Ltd., Shanghai 201203 (CN)
(72) Inventor: MOU, Jian, Shanghai 201203 (CN)
(74) Representative: Vogelbruch, Keang
(86) International application number: PCT/CN2023/143465
(87) International publication number: WO 2025/138179

(57) **Abstract**

Provided are a control method and apparatus, an electronic device, and a storage medium. The method comprises: issuing alternating-current active power to corresponding bidirectional energy storage converters so as to adjust current distributed by each bidirectional energy storage converter; and controlling each direct-current power converter on the basis of a target current distribution ratio so as to adjust current distributed to each battery cluster. By controlling alternating-current active power issued to the bidirectional energy storage converters to be a given value, the current of each direct-current bus is controlled, so that battery stacks are simultaneously fully charged or fully discharged; in addition, the current is distributed on the basis of the current ratio of battery clusters in a same stack to reduce system differences, thereby greatly improving the consistency, service life, working efficiency and depth of charge and discharge of a whole battery energy storage system.

## Description

### CROSS-REFERENCE TO THE RELATED APPLICATIONS

The present invention claims the priority of the Chinese patent application filed with the China National Intellectual Property Administration on December 27, 2023, with the application number 2023118328560 and entitled "CONTROL METHOD AND APPARATUS, ELECTRONIC DEVICE, AND STORAGE MEDIUM", the entire content of which is incorporated into the present invention by reference.

### TECHNICAL FIELD

The present invention relates to the technical field of circuit control, and specifically, to a control method and apparatus, an electronic device, and a storage medium.

### BACKGROUND

The electric quantity of a single battery cluster can no longer meet people's demands. To accommodate the growing power demands of people, battery energy storage systems have emerged as required. A battery energy storage system consists of a plurality of battery stacks connected in parallel, and each battery stack is further composed of a plurality of battery clusters connected in parallel. To prolong the service life of the battery energy storage system, during use (charging and discharging), it is necessary to ensure as much as possible that the remaining electric quantities of the battery clusters in the battery energy storage system are in the same state.

In the prior art, the current is distributed to battery clusters according to capacity ratios of the battery clusters. The distribution accuracy of this manner is relatively poor. During use, some battery stacks still reach a fully charged state or a fully discharged state earlier than others, resulting in inconsistent times at which the battery stack and other battery stacks exit the operating state, which affects the utilization rate and the depth of discharge (DoD) of the entire energy storage system.

### SUMMARY

In view of this, an objective of the present invention is to provide a control method and apparatus, an electronic device, and a storage medium, so as to overcome the problems in the prior art.

In a first aspect, an embodiment of the present invention provides a control method, acting on a battery energy storage system, wherein the battery energy storage system comprises a plurality of battery stacks and an energy storage manager; each of the battery stacks comprises a bidirectional energy storage converter, a plurality of direct-current power converters and a plurality of battery clusters; each battery cluster is sequentially connected to an alternating-current power grid via the direct-current power converter and the bidirectional energy storage converter that correspond to the battery cluster; and the energy storage manager is in signal connection with each direct-current power converter and each bidirectional energy storage converter, respectively; and the method comprises:
for each of the battery stacks, determining, by the energy storage manager according to a battery cluster parameter of each battery cluster in the battery stack, a target current distribution ratio set for each battery cluster;
acquiring, by the energy storage manager in real time, current remaining capacities of the respective battery stacks, a first actual alternating-current power of all the battery stacks, and a direct-current voltage of each bidirectional energy storage converter;
calculating, by the energy storage manager according to a preset first constraint condition and on the basis of the acquired first actual alternating-current power, the current remaining capacities and the direct-current voltages, alternating-current active power of each of the battery stacks; and
issuing, by the energy storage manager, the alternating-current active power to the corresponding bidirectional energy storage converter, so as to adjust current distributed by each of the bidirectional energy storage converters, and controlling each of the direct-current power converters on the basis of the target current distribution ratio, so as to adjust current distributed to each battery cluster.

In some technical solutions of the present invention, the calculating, by the energy storage manager according to a preset first constraint condition and on the basis of the acquired first actual alternating-current power, the current remaining capacities and the direct-current voltages, alternating-current active power of each of the battery stacks comprises:
calculating direct-current active power of the battery stacks on the basis of a power balance principle and according to the first actual alternating-current power, the current remaining capacities, the direct-current voltages and the first constraint condition; and
calculating the alternating-current active power of each of the battery stacks according to the direct-current active power of the battery stacks and a working efficiency of each bidirectional energy storage converter.

In some technical solutions of the present invention, the first constraint condition is that a current remaining capacity of any battery stack and a reference ratio of the battery stack are in a positive correlation relationship; and the reference ratio is a ratio of the direct-current active power of the battery stack to the direct-current voltage.

In some technical solutions of the present invention, the calculating direct-current active power of the battery stacks on the basis of a power balance principle and according to the first actual alternating-current power, the current remaining capacities, the direct-current voltages and the first constraint condition comprises:
on the basis that a current remaining capacity of any battery stack and a reference ratio of the battery stack are in a positive correlation relationship, determining, according to a first relative ratio of the current remaining capacities among the respective battery stacks, a second relative ratio among the reference ratios of the respective battery stacks; and
calculating, on the basis of the power balance principle and according to the second relative ratio among the reference ratios of the respective battery stacks, the first actual alternating-current power and the direct-current voltage of each bidirectional energy storage converter, the direct-current active power of each of the battery stacks.

In some technical solutions of the present invention, the calculating, on the basis of the power balance principle and according to the second relative ratio among the reference ratios of the respective battery stacks, the first actual alternating-current power and the direct-current voltage of each bidirectional energy storage converter, the direct-current active power of each of the battery stacks comprises:
constructing a first matrix operation expression on the basis of the power balance principle, wherein the second relative ratio among the reference ratios of the respective battery stacks, the first actual alternating-current power and the direct-current voltage of each bidirectional energy storage converter serve as known quantities, and the direct-current active power of each of the battery stacks serves as a variable to be solved; and
solving the first matrix operation expression to obtain the direct-current active power of each of the battery stacks.

In some technical solutions of the present invention, the first matrix operation expression comprises a first known matrix, a second known matrix and a first matrix to be solved; and the constructing a first matrix operation expression on the basis of the power balance principle comprises:
constructing the first known matrix according to the second relative ratio among the reference ratios of the respective battery stacks, and the direct-current voltage and the working efficiency of each bidirectional energy storage converter;
constructing the second known matrix according to the first actual alternating-current power; and
constructing the first matrix to be solved according to the direct-current active power of each of the battery stacks,
wherein a product of the first known matrix and the first matrix to be solved is equal to the second known matrix.

In some technical solutions of the present invention, the calculating the alternating-current active power of each of the battery stacks according to the direct-current active power of the battery stacks and the working efficiency of each bidirectional energy storage converter comprises:
determining, according to the working efficiency of each bidirectional energy storage converter, a conversion ratio corresponding to the direct-current active power of the bidirectional energy storage converter; and
converting the direct-current active power of the bidirectional energy storage converter into the alternating-current active power of the battery stack according to the conversion ratio.

In some technical solutions of the present invention, the power balance principle is that a total power input of the battery energy storage system is equal to a total power output; the total power input is the first actual alternating-current power of all the battery stacks; and the total power output is a sum of the direct-current active power of each battery stack.

In some technical solutions of the present invention, the energy storage manager acquires the first actual alternating-current power of all the battery stacks in the following manner:
the energy storage manager acquires sub alternating-current power of each battery stack;
all the sub alternating-current powers are aggregated together to obtain a first total power of all the battery stacks; and
the first actual alternating-current power is obtained by performing actual loss-removal processing on the first total power.

In some technical solutions of the present invention, the bidirectional energy storage converter is further connected to other energy power supply systems; and
the energy storage manager calculates the alternating-current active power of each of the battery stacks in the following manner, comprising:
calculating, by the energy storage manager according to a preset second constraint condition and on the basis of the acquired first actual alternating-current power, a second actual alternating-current power of other direct-current energy systems, the current remaining capacities and the direct-current voltages, the alternating-current active power of each of the battery stacks.

In some technical solutions of the present invention, the calculating, by the energy storage manager according to a preset second constraint condition and on the basis of the acquired first actual alternating-current power, the second actual alternating-current power of the other direct-current energy system, the current remaining capacities and the direct-current voltages, the alternating-current active power of each of the battery stacks comprises:
calculating direct-current active power of the battery stacks on the basis of a power balance principle and according to the first actual alternating-current power, the second actual alternating-current power, the current remaining capacities, the direct-current voltages, direct-current active power of each other direct-current energy system and the second constraint condition; and
calculating the alternating-current active power of each of the battery stacks according to the direct-current active power of the battery stacks and a working efficiency of each bidirectional energy storage converter.

In some technical solutions of the present invention, the second constraint condition is that a current remaining capacity of any battery stack and a reference difference of the battery stack are in a positive correlation relationship; the reference difference is a difference between a first ratio and a second ratio; and the first ratio is a ratio of direct-current active power of the battery stack to the direct-current voltage, and the second ratio is a ratio of direct-current active power of the other direct-current energy to the direct-current voltage.

In some technical solutions of the present invention, the calculating direct-current active power of the battery stacks on the basis of a power balance principle and according to the first actual alternating-current power, the second actual alternating-current power, the current remaining capacities, the direct-current voltages, the direct-current active power of each other direct-current energy system and the second constraint condition comprises:
on the basis that a current remaining capacity of a battery stack and a reference difference of the battery stack are in a positive correlation relationship, calculating, according to a first relative ratio among the current remaining capacities of the respective battery stacks, a third relative ratio among reference differences of the respective battery stacks; and
calculating, on the basis of the power balance principle and according to the third relative ratio, the first actual alternating-current power, the second actual alternating-current power, the direct-current active power of each other direct-current energy system and the direct-current voltage of each bidirectional energy storage converter, the direct-current active power of each of the battery stacks.

In some technical solutions of the present invention, the calculating, on the basis of the power balance principle and according to the third relative ratio, the first actual alternating-current power, the second actual alternating-current power, the direct-current active power of each other direct-current energy system and the direct-current voltage of each bidirectional energy storage converter, the direct-current active power of each of the battery stacks comprises:
constructing a second matrix operation expression on the basis of the power balance principle, wherein the third relative ratio, the first actual alternating-current power, the direct-current active power of each other direct-current energy system and the direct-current voltage of each bidirectional energy storage converter serve as known quantities, and the direct-current active power of each of the battery stacks serves as a variable to be solved; and
solving the second matrix operation expression to obtain the direct-current active power of each of the battery stacks.

In some technical solutions of the present invention, the second matrix operation expression comprises a third known matrix, a fourth known matrix and a second matrix to be solved; and the constructing a second matrix operation expression on the basis of the power balance principle comprises:
constructing the third known matrix according to the third relative ratio among the reference differences of the respective battery stacks, and the direct-current voltage and the working efficiency of each bidirectional energy storage converter;
constructing the fourth known matrix according to the first actual alternating-current power, the second actual alternating-current power and the direct-current active power of each other direct-current energy system; and
constructing the second matrix to be solved according to the direct-current active power of each of the battery stacks and the direct-current active power of each other direct-current energy system,
wherein a product of the third known matrix and the second matrix to be solved is equal to the fourth known matrix.

In some technical solutions of the present invention, the calculating the alternating-current active power of each of the battery stacks according to the direct-current active power of the battery stacks and the working efficiency of each bidirectional energy storage converter comprises:
determining, according to the working efficiency of each bidirectional energy storage converter, a conversion ratio corresponding to the direct-current active power of the bidirectional energy storage converter; and
converting the direct-current active power of the bidirectional energy storage converter into the alternating-current active power of the battery stack according to the conversion ratio.

In some technical solutions of the present invention, the power balance principle is that a total power input of the battery energy storage system and the other energy power supply systems is equal to a total power output; and the total power input is the first actual alternating-current power of all the battery stacks and the second actual alternating-current power of the other energy power supply systems, and the total power input is a sum of the direct-current active power of each battery stack and the second actual alternating-current power of the other energy power supply systems.

In some technical solutions of the present invention, the target current distribution ratio is within a distribution ratio constraint interval, and the battery cluster parameter comprises at least one of the following items: a current remaining capacity of a battery cluster, a capacity setting critical value, and a distribution ratio constraint interval set for each battery cluster which is determined according to a total battery cluster quantity of a plurality of battery clusters connected in parallel in the battery energy storage system.

In some technical solutions of the present invention, the determining, according to the total battery cluster quantity of the plurality of battery clusters connected in parallel in the battery energy storage system, the distribution ratio constraint interval set for each battery cluster comprises:
under the condition that a system parameter of the battery energy storage system does not satisfy an equal current distribution condition, determining, according to the total battery cluster quantity of the plurality of battery clusters connected in parallel in the battery energy storage system, the distribution ratio constraint interval set for each battery cluster.

In some technical solutions of the present invention, the determining, according to the total battery cluster quantity of the plurality of battery clusters connected in parallel in the battery energy storage system, the distribution ratio constraint interval set for each battery cluster comprises:
acquiring the total battery cluster quantity of the plurality of battery clusters connected in parallel in the battery energy storage system and an overload constraint ratio of the battery energy storage system, wherein the overload constraint ratio represents a preset ratio by which current of a battery cluster in a charging or discharging process exceeds a rated current range; and
determining, according to the overload constraint ratio, an upper distribution ratio constraint limit and a lower distribution ratio constraint limit of the battery energy storage system, so as to determine the distribution ratio constraint interval set for each battery cluster.

In some technical solutions of the present invention, the battery cluster parameter comprises the current remaining capacity of the battery cluster and the capacity setting critical value, wherein the capacity setting critical value represents that states of charge of the respective battery clusters in the battery energy storage system converge to be consistent fastest; and
the determining, according to the battery cluster parameter, the target current distribution ratio set for each battery cluster comprises:
determining, according to the current remaining capacity of each battery cluster and the capacity setting critical value, a first to-be-adjusted current distribution ratio set for each battery cluster; and
determining the target current distribution ratio according to whether the first to-be-adjusted current distribution ratio is within the distribution ratio constraint interval.

In some technical solutions of the present invention, each battery cluster corresponds to one of the direct-current power converters, and each battery stack corresponds to one of the bidirectional energy storage converters, wherein the battery cluster and the direct-current power converter corresponding to the battery cluster are packaged together.

In a second aspect, an embodiment of the present invention provides a control apparatus, acting on a battery energy storage system, wherein the battery energy storage system comprises a plurality of battery stacks and an energy storage manager; each of the battery stacks comprises a bidirectional energy storage converter, a plurality of direct-current power converters and a plurality of battery clusters; each battery cluster is sequentially connected to an alternating-current power grid via the direct-current power converter and the bidirectional energy storage converter that correspond to the battery cluster; and the energy storage manager is in signal connection with each direct-current power converter and each bidirectional energy storage converter, respectively. The apparatus comprises:
a determination module, configured to determine, for each of the battery stacks, a target current distribution ratio set for each battery cluster according to a battery cluster parameter of each battery cluster in the battery stack;
an acquisition module, configured to acquire in real time current remaining capacities of the respective battery stacks, a first actual alternating-current power of all the battery stacks, and a direct-current voltage of each bidirectional energy storage converter;
a calculation module, configured to calculate, according to a preset first constraint condition and on the basis of the acquired first actual alternating-current power, the current remaining capacities and the direct-current voltages, alternating-current active power of each of the battery stacks; and
a control module, configured to issue the alternating-current active power to the corresponding bidirectional energy storage converter, so as to adjust current distributed by each of the bidirectional energy storage converters, and control each of the direct-current power converters on the basis of the target current distribution ratio, so as to adjust current distributed to each battery cluster.

In a third aspect, an embodiment of the present invention provides an electronic device, comprising a memory, a processor, and a computer program stored on the memory and executable on the processor, wherein the processor implements the steps of the above control method when executing the computer program.

In a fourth aspect, an embodiment of the present invention provides a computer-readable storage medium, wherein the computer-readable storage medium stores a computer program, and the computer program executes the steps of the above control method when being run by a processor.

The technical solutions provided by the embodiments of the present invention can comprise the following beneficial effects.

The method of the present invention comprises: for each of the battery stacks, determining, by the energy storage manager according to a battery cluster parameter of each battery cluster in the battery stack, a target current distribution ratio set for each battery cluster; acquiring, by the energy storage manager in real time, current remaining capacities of the respective battery stacks, a first actual alternating-current power of all the battery stacks, and a direct-current voltage of each bidirectional energy storage converter; calculating, by the energy storage manager according to a preset first constraint condition and on the basis of the acquired first actual alternating-current power, the current remaining capacities and the direct-current voltages, alternating-current active power of each of the battery stacks; and issuing, by the energy storage manager, the alternating-current active power to the corresponding bidirectional energy storage converter, so as to adjust current distributed by each of the bidirectional energy storage converters, and controlling each of the direct-current power converters on the basis of the target current distribution ratio, so as to adjust current distributed to each battery cluster.

In the present invention, by controlling the alternating-current active power issued to the bidirectional energy storage converters to be a given value, the current of each direct-current bus is controlled, so that the battery stacks are simultaneously fully charged or fully discharged. In addition, the current is distributed on the basis of the current ratio of battery clusters in the same stack to reduce system differences, thereby greatly improving the consistency, service life, working efficiency and depth of charge and discharge of the entire battery energy storage system.

To make the above objectives, features and advantages of the present invention more apparent and understandable, preferred embodiments are given hereinafter and described in detail with reference to the drawings.

### BRIEF DESCRIPTION OF THE DRAWINGS

To more clearly illustrate the technical solutions of the embodiments of the present invention, the drawings required in the embodiments are briefly introduced below. It should be understood that the following drawings merely show some embodiments of the present invention and therefore should not be regarded as limiting the scope, and those of ordinary skill in the art can further obtain other related drawings based on these drawings without creative labor.
FIG. 1 shows a schematic flow diagram of a control method provided by an embodiment of the present invention;
FIG. 2 shows a schematic diagram of a battery energy storage system provided by an embodiment of the present invention;
FIG. 3 shows a schematic diagram of another battery energy storage system provided by an embodiment of the present invention;
FIG. 4 shows a schematic diagram of circuit connection in which a battery energy storage system provided by an embodiment of the present invention is alternating-current coupled with another energy system;
FIG. 5 shows a schematic diagram of circuit connection in which a battery energy storage system provided by an embodiment of the present invention is direct-current coupled with another energy system;
FIG. 6 is a schematic diagram of a control apparatus provided by an embodiment of the present invention; and
FIG. 7 is a schematic structural diagram of an electronic device provided by an embodiment of the present invention.

### DETAILED DESCRIPTION OF THE EMBODIMENTS

To make the objectives, technical solutions and advantages of the embodiments of the present invention clearer, the technical solutions in the embodiments of the present invention are clearly and completely described below with reference to the drawings in the embodiments of the present invention. It should be understood that the drawings of the present invention merely serve the purposes of illustration and description and are not intended to limit the protection scope of the present invention. In addition, it should be understood that the schematic drawings are not drawn to the scale of actual objects. The flowcharts used in the present invention show operations implemented according to some embodiments of the present invention. It should be understood that the operations of the flowcharts can be implemented out of order, and steps without a logical context relationship can be reversed in order or implemented simultaneously. In addition, those skilled in the art, under the guidance of the content of the present invention, can add one or more other operations to the flowcharts, or remove one or more operations from the flowcharts.

In addition, the described embodiments are merely part of the embodiments of the present invention, rather than all of the embodiments. The components of the embodiments of the present invention generally described and shown in the drawings herein can be arranged and designed in various different configurations. Therefore, the following detailed description of the embodiments of the present invention provided in the drawings is not intended to limit the scope of the claimed present invention, but merely represents selected embodiments of the present invention. All other embodiments obtained by those skilled in the art based on the embodiments of the present invention without creative labor fall within the protection scope of the present invention.

It should be noted that the term "include/comprise" will be used in the embodiments of the present invention to indicate the presence of the features stated thereafter, but does not exclude the addition of other features.

The electric quantity of a single battery cluster can no longer meet people's demands. To accommodate the growing power demands of people, battery energy storage systems have emerged as required. A battery energy storage system consists of a plurality of battery stacks connected in parallel, and each battery stack is further composed of a plurality of battery clusters connected in parallel. To prolong the service life of the battery energy storage system, during use (charging and discharging), it is necessary to ensure as much as possible that the remaining electric quantities of the battery clusters in the battery energy storage system are in the same state.

In the prior art, current is distributed to battery clusters according to capacity ratios of the battery clusters. The distribution accuracy of this manner is relatively poor. During use, some battery stacks still reach a fully charged state or a fully discharged state earlier than others, resulting in inconsistent times at which the battery stack and other battery stacks exit the operating state, which affects the utilization rate and the depth of discharge (DoD) of the entire energy storage system.

Based on this, an embodiment of the present invention provides a control method and apparatus, an electronic device, and a storage medium, which are described below through embodiments.

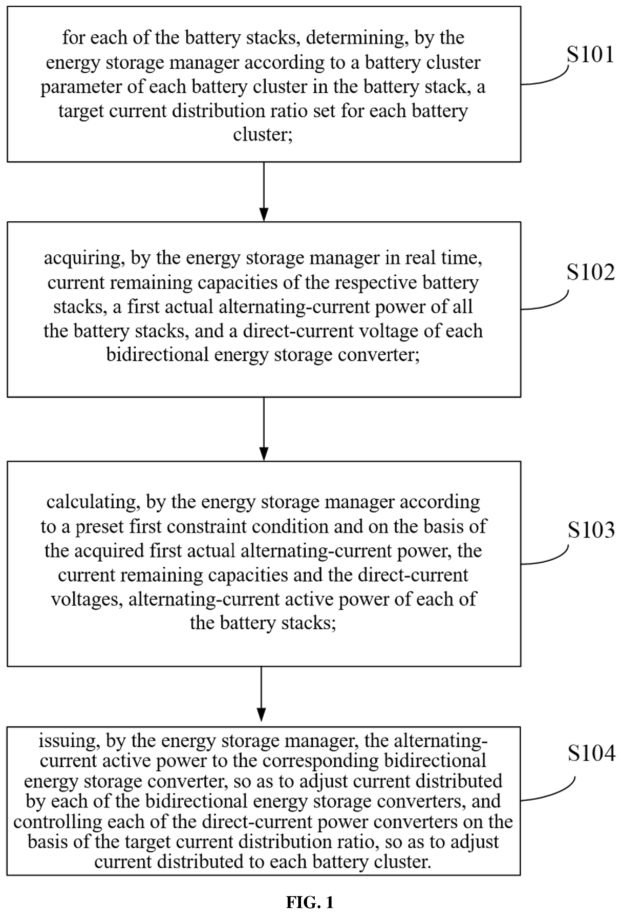

FIG. 1 shows a schematic flow diagram of a control method provided by an embodiment of the present invention, wherein the method acts on a battery energy storage system, and the method comprises S101 to S104:
S101, for each of the battery stacks, determining, by the energy storage manager according to a battery cluster parameter of each battery cluster in the battery stack, a target current distribution ratio set for each battery cluster;
S102, acquiring, by the energy storage manager in real time, current remaining capacities of the respective battery stacks, a first actual alternating-current power of all the battery stacks, and a direct-current voltage of each bidirectional energy storage converter;
S103, calculating, by the energy storage manager according to a preset first constraint condition and on the basis of the acquired first actual alternating-current power, the current remaining capacities and the direct-current voltages, alternating-current active power of each of the battery stacks; and
S104, issuing, by the energy storage manager, the alternating-current active power to the corresponding bidirectional energy storage converter, so as to adjust current distributed by each of the bidirectional energy storage converters, and controlling each of the direct-current power converters on the basis of the target current distribution ratio, so as to adjust current distributed to each battery cluster.

In the present invention, by controlling the alternating-current active power issued to the bidirectional energy storage converters to be a given value, the current of each direct-current bus is controlled, so that the battery stacks are simultaneously fully charged or fully discharged. In addition, the current is distributed on the basis of the current ratio of battery clusters in the same stack to reduce system differences, thereby greatly improving the consistency, service life, working efficiency and depth of charge and discharge of the entire battery energy storage system.

Some embodiments of the present invention are described in detail below. The following embodiments and features in the embodiments can be combined with each other if there is no conflict.

Before introducing the control method of the present invention, the battery energy storage system in the embodiment of the present invention is first introduced. The battery energy storage system in the prior art is merely formed by connecting a plurality of battery clusters in parallel, without a DC/DC being provided. A conventional energy storage system is generally directly formed by connecting a plurality of battery clusters in parallel to the direct-current side of a PCS. In this manner, due to the existence of an inter-cluster voltage difference caused by inter-cluster inconsistency of the battery clusters, an inter-cluster circulating current is generated, and an excessive inter-cluster circulating current affects the battery life. Moreover, due to the inconsistency of internal resistances, the magnitude of the current of each battery cluster in the charging and discharging process is determined by the internal resistance, which continuously amplifies the reduction of the depth of discharge caused by the bucket effect. After the DC/DC is added, the current of each cluster can be precisely controlled, thereby enhancing the system consistency and improving the depth of discharge; different from a parallel DC/DC, a series DC/DC has lower requirements on voltage withstand, the charging and discharging current range remains unchanged, and the output voltage is only tens of volts, which is lower in power, smaller in size and lower in cost compared with hundreds to thousands of volts of the parallel DC/DC.

PCS control algorithms comprise PQ control (P being active power and Q being reactive power, which is a power control mode of the PCS), VF control (V being a voltage amplitude and F being a voltage frequency, which is a constant-voltage control mode of the PCS) and droop control, and the distribution algorithm described in the control method of the present invention is applicable to the grid-connected PQ control algorithm of the PCS.

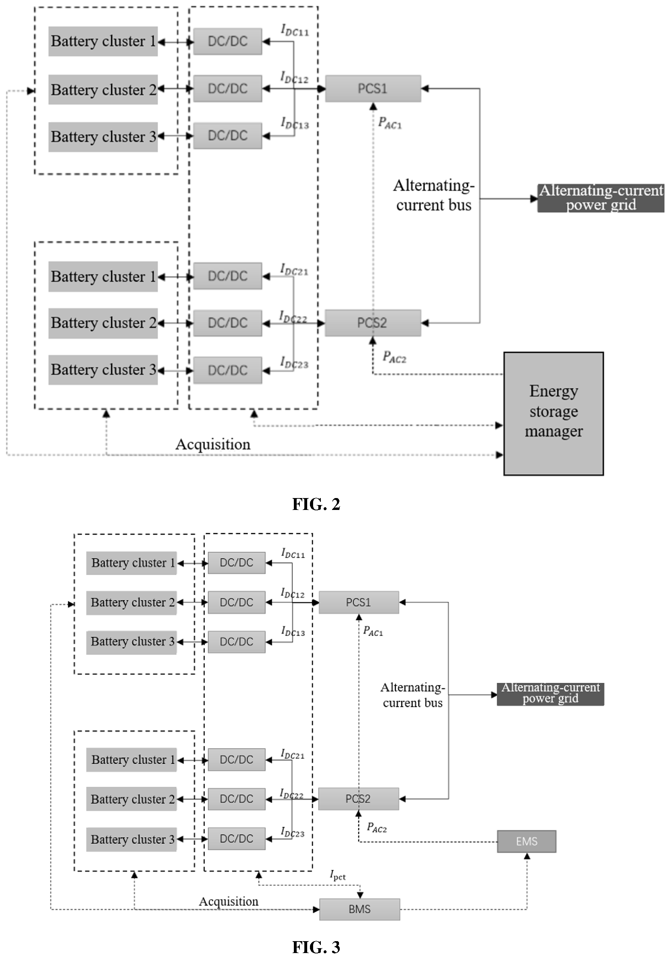

As shown in FIG. 2, the battery energy storage system in the embodiment of the present invention comprises a plurality of battery stacks and an energy storage manager; each of the battery stacks comprises a bidirectional energy storage converter, a plurality of direct-current power converters and a plurality of battery clusters; each battery cluster is sequentially connected to an alternating-current power grid via the direct-current power converter and the bidirectional energy storage converter that correspond to the battery cluster; and the energy storage manager is in signal connection with each direct-current power converter and each bidirectional energy storage converter, respectively. Each battery cluster corresponds to one of the direct-current power converters, and each battery stack corresponds to one of the bidirectional energy storage converters, wherein the battery cluster and the direct-current power converter corresponding to the battery cluster are packaged together. In an optional embodiment, as shown in FIG. 3, the energy storage manager in the embodiment of the present invention comprises a battery management system (BMS) and an energy management system (EMS). That is, in this embodiment, the BMS and the EMS jointly undertake the management work of the energy storage manager in the above embodiment. It should be noted that in FIG. 2 and FIG. 3, solid connection lines represent electrical connections, and spaced connection lines represent signal connections. The dashed box outside battery cluster 1 to battery cluster 3 represents that battery cluster 1 to battery cluster 3 (comprising the DC/DCs corresponding to battery cluster 1 to battery cluster 3) are packaged in one housing. The dashed box outside the DC/DCs in the figures merely means that all the DC/DCs are classified into an integral unit, and does not represent a physical positional relationship. In the system shown in FIG. 3, the control method in the prior art cannot directly control the magnitude of the direct current of each energy storage PCS through an EMS instruction, and moreover, due to the efficiency of each PCS and the inconsistency of the battery clusters on the direct-current side, the voltage of each direct-current bus is not the same, and the current of each direct-current bus is mutually independent without coupling. If the total power is distributed directly according to the capacity proportion of each battery stack, it is difficult to precisely control the direct-current bus current, so that when the energy storage system operates in a grid-connected manner, a certain energy storage battery stack or container may reach the fully charged or fully discharged state first, causing the stack to exit the operating state, which affects the availability and the DoD of the entire energy storage system.

For the system shown in FIG. 2, the control method of S101 to S104 can be divided into two hierarchies for control. The first hierarchy is the control of the DC/DC side by the energy storage manager. Specifically, for each of the battery stacks, the energy storage manager determines, according to a battery cluster parameter of each battery cluster in the battery stack, a target current distribution ratio set for each battery cluster; and each of the direct-current power converters is controlled on the basis of the target current distribution ratio, so as to adjust current distributed to each battery cluster. The second hierarchy is the control of the PCS side by the energy storage manager. Specifically, the energy storage manager acquires in real time current remaining capacities of the respective battery stacks, a first actual alternating-current power of all the battery stacks, and a direct-current voltage of each bidirectional energy storage converter; the energy storage manager calculates, according to a preset first constraint condition and on the basis of the acquired first actual alternating-current power, the current remaining capacities and the direct-current voltages, alternating-current active power of each of the battery stacks; and the energy storage manager issues the alternating-current active power to the corresponding bidirectional energy storage converter, so as to adjust current distributed by each of the bidirectional energy storage converters.

For the system shown in FIG. 3, the control method of S101 to S104 can be divided into two hierarchies for control. The first hierarchy is the control of the DC/DC side by the BMS. Specifically, for each of the battery stacks, the BMS determines, according to a battery cluster parameter of each battery cluster in the battery stack, a target current distribution ratio set for each battery cluster; and each of the direct-current power converters is controlled on the basis of the target current distribution ratio, so as to adjust current distributed to each battery cluster. The second hierarchy is the control of the PCS side by the EMS. Specifically, the EMS acquires in real time current remaining capacities of the respective battery stacks, a first actual alternating-current power of all the battery stacks, and a direct-current voltage of each bidirectional energy storage converter; the EMS calculates, according to a preset first constraint condition and on the basis of the acquired first actual alternating-current power, the current remaining capacities and the direct-current voltages, alternating-current active power of each of the battery stacks; and the EMS issues the alternating-current active power to the corresponding bidirectional energy storage converter, so as to adjust current distributed by each of the bidirectional energy storage converters.

In specific implementation, the EMS is arranged in a plurality of hierarchies in the respective battery stacks (for example, the arrangement can be made in the manner of battery packs, battery clusters and battery stacks). Battery pack power data is acquired from the battery packs of lower hierarchies and then aggregated to obtain the sub alternating-current power of each battery stack, and all the sub alternating-current powers are aggregated together to obtain the first total power of all the battery stacks (P₀); and the first actual alternating-current power (P∗) is obtained by performing actual loss-removal processing on the first total power. P* is the alternating-current side power of the actual operation of the entire energy storage system; specifically, the actual loss-removal processing is manually input according to requirements, and can also be performed according to an optimization algorithm (taking into consideration revenue, battery health, temperature and the like), but follows P∗ ≤ P₀. After obtaining the first actual alternating-current power, the BMS sends the first actual alternating-current power to the EMS.

It should be noted that in the processing of the above two hierarchies, there is no chronological processing order between the first hierarchy and the second hierarchy, that is, S101 to S104 in the embodiment of the present invention are merely exemplary, and the method can also be performed in the manner of S102, S103, S101 and S104, or in the manner in which S101 is performed synchronously with S102 and S103, followed by S104.

The control method of the present invention will be introduced below in two hierarchies; and before introducing the control method, characters appearing hereinafter are first defined, specifically, i: battery stack serial number; j: battery cluster serial number; imax: the number of PCSs connected in parallel; jmax: the number of battery clusters connected in parallel in each battery stack; Pᵢⱼ: the power of the j-th battery cluster corresponding to the i-th PCS; P_{DC,i}: the direct-current side power of the i-th PCS; P_{DG}: the power of the other energy power supply system of each stack; P_{AC,i}: the alternating-current active power issued by the EMS to the i-th PCS; soc₀: the initial soc of a battery cluster; Δsoc₀: the initial maximum soc difference among clusters; I_{ij,pct}: the current ratio of the j-th cluster of the i-th stack; Capᵢⱼ: the current remaining capacity (chargeable/dischargeable) of the j-th cluster of the i-th stack; C_{i,min}: the remaining working capacity when the system soc solved by the DC/DC fast distribution algorithm converges to be consistent; Iᵢⱼ: the direct-current current value of the j-th cluster of the i-th stack; I_{DC,i}: the direct-current bus current of the i-th stack; ηᵢ: the working efficiency of the i-th PCS; Capᵢ: the current remaining capacity (chargeable/dischargeable) of the battery of the i-th stack; U_{DC,i}: the direct-current bus direct-current voltage of the i-th stack; A: the coefficient matrix of the boundary condition equation set; x: the vector of variables to be solved of the boundary condition equation set; b: the constraint condition of the boundary condition equation set; I_{Bat}: the total battery current of the direct-current bus of each stack; and I_{DG}: the current of the other energy power supply system of the direct-current bus of each stack.

In an optional embodiment, for the first hierarchy, a target ratio for current distribution is determined.

In S101, the battery cluster parameter refers to a parameter associated with current distribution of a battery cluster; the parameter can be an attribute feature of the battery cluster, such as a current remaining capacity of the battery cluster; the parameter can be a numerical value preset according to the attribute feature of the battery cluster, wherein the preset numerical value can be adjusted in real time and is applicable to each battery cluster, for example, each battery cluster corresponds to the same capacity setting critical value; and the parameter can also be a numerical value calculated according to the attribute feature of the battery cluster, such as a distribution ratio constraint interval calculated according to the total battery cluster quantity and the overload constraint ratio.

Here, the target current distribution ratio set for each battery cluster is determined according to the battery cluster parameter, and the target current distribution ratio is within the distribution ratio constraint interval. That is, the target current distribution ratio set for each battery cluster can be accurately determined according to the battery cluster parameter, so that when current is distributed to the respective battery clusters according to the target current distribution ratio, battery clusters of different capacities can reach balance as soon as possible during operation.

The above distribution ratio constraint interval is obtained through the following steps.

S1011, acquiring the total battery cluster quantity of the plurality of battery clusters connected in parallel in the battery energy storage system and the overload constraint ratio of the battery energy storage system, wherein the overload constraint ratio represents a preset ratio by which the current of a battery cluster in a charging or discharging process exceeds the rated current range.

Here, overload means that the battery energy storage system can still operate beyond the rated current range in a certain abnormal state, wherein the abnormal state refers to a state in which the battery energy storage system operates with clusters missing while maintaining constant power/current output. The overload constraint ratio represents the preset ratio by which the current of a battery cluster in a charging or discharging process exceeds the rated current range. That is, the overload constraint ratio represents a preset ratio by which the current of a battery cluster in a charging process is allowed to exceed a first current specified value, or a preset ratio by which the current of a battery cluster in a discharging process is allowed to be lower than a second current specified value, wherein the second current specified value is smaller than the first current specified value, and the range between the first current specified value and the second current specified value constitutes the rated current range.

Exemplarily, the overload constraint ratio ranges from 0 to 1, specifically, the overload constraint ratio can be 0.1.

S1012, determining, according to the overload constraint ratio, the upper distribution ratio constraint limit and the lower distribution ratio constraint limit of the battery energy storage system, so as to determine the distribution ratio constraint interval set for each battery cluster.

Specifically, the upper distribution ratio constraint limit and the lower distribution ratio constraint limit are determined as two endpoint values of the distribution ratio constraint interval.

Exemplarily, S1012 specifically comprises the following steps.

S1012a, determining, according to the overload constraint ratio, an upper distribution ratio constraint limit total value and a lower distribution ratio constraint limit total value of the battery energy storage system.

Here, since the overload constraint ratio is between 0 and 1, the upper distribution ratio constraint limit total value is the sum of 1 and the overload constraint ratio, and the lower distribution ratio constraint limit total value is the difference between 1 and the overload constraint ratio.

S1012b, determining the upper distribution ratio constraint limit and the lower distribution ratio constraint limit set for each battery cluster by using ratios of the upper distribution ratio constraint limit total value and the lower distribution ratio constraint limit total value to the total battery cluster quantity, respectively.

Here, the distribution ratio constraint interval of each battery cluster is the same.

Exemplarily, the total battery cluster quantity is defined as n, the overload constraint ratio is defined as limit, I_{pct_max} represents the upper distribution ratio constraint limit, and I_{pct_min} represents the lower distribution ratio constraint limit; and the calculation formulas of the upper distribution ratio constraint limit I_{pct_max} and the lower distribution ratio constraint limit I_{pct_min} are as follows: ${I}_{pct_max} = \frac{1 + limit}{n}$ ${I}_{pct_min} = \frac{1 - limit}{n} .$

For example, limit can be set to 0.1 according to actual configuration parameters and the like of the battery clusters, and then ${I}_{pct_max} = \frac{1.1}{n}$ ${I}_{pct_min} = \frac{0.9}{n} .$

The embodiment of the present invention can adjust the overload constraint ratio in real time according to the actual operation condition of the battery clusters, so that the upper distribution ratio constraint limit and the lower distribution ratio constraint limit can be flexibly set; within the distribution ratio constraint interval, the current can be distributed according to the target current distribution ratio set for each battery cluster; and since the range of the target current distribution ratio is fixed, the stability and reliability of the battery energy storage system can be further improved.

Further, in the case where the states of charge of the respective battery clusters differ excessively, the target current distribution ratios of the respective battery clusters are different, but the difference of the target current distribution ratios is ensured to be within the distribution ratio constraint interval, so that the states of charge of the respective battery clusters can reach consistency at a relatively fast speed while the problem of overload of the battery energy storage system caused by externally induced oscillation is avoided to the greatest extent, thereby achieving balanced management and safe use, and further prolonging the service life of the battery clusters in the battery energy storage system.

In a preferred embodiment, the battery cluster parameter comprises the current remaining capacity of the battery cluster and the capacity setting critical value. Here, the current remaining capacity refers to the maximum chargeable or maximum dischargeable capacity of the battery cluster in the current working state, and the capacity setting critical value represents that the states of charge of the respective battery clusters in the battery energy storage system converge to be consistent fastest. Exemplarily, the capacity setting critical value can be the minimum value among the current remaining capacities of the plurality of battery clusters.

Here, a capacity adjustment limit range is set in advance for the capacity setting critical value, and the capacity adjustment limit range cannot be exceeded when the capacity setting critical value is adjusted. Specifically, when the plurality of battery clusters in the battery energy storage system are in a discharging working condition or a charging working condition, the capacity adjustment limit range corresponds to the range between 0 and the capacity setting critical value.

The determining, according to the battery cluster parameter, the target current distribution ratio set for each battery cluster specifically comprises the following steps.

Step 1021, determining, according to the current remaining capacity of each battery cluster and the capacity setting critical value, a first to-be-adjusted current distribution ratio set for each battery cluster.

Specifically, a capacity difference between the current remaining capacity of each battery cluster and the capacity setting critical value is calculated. The sum of the capacity differences corresponding to all the battery clusters is calculated, and for each battery cluster, a ratio of the capacity difference corresponding to the battery cluster to the sum of the capacity differences is calculated. The ratio is determined as the first to-be-adjusted current distribution ratio.

Exemplarily, the first to-be-adjusted current distribution ratio of the i-th battery cluster is defined as I_{1i,pct}, the capacity setting critical value is defined as min_cap, the current remaining capacity is defined as capᵢ, and the total battery cluster quantity is n. Furthermore, the calculation formula of the first to-be-adjusted current distribution ratio of the i-th battery cluster I_{1i,pct} is as follows: ${I}_{1 i , pct} = \frac{{cap}_{i} - min_cap}{{\sum }_{i = 1}^{n} \left({cap}_{i}-min_cap\right)} .$

Through the above formula, the first to-be-adjusted current distribution ratio corresponding to each battery cluster can be calculated, and the purpose of quickly distributing current to the battery clusters can be achieved according to the first to-be-adjusted current distribution ratio.

Step 1022, determining the target current distribution ratio according to whether the first to-be-adjusted current distribution ratio is within the distribution ratio constraint interval.

Step 1022 specifically comprises the following steps.

Step 1022a, if it is detected that the first to-be-adjusted current distribution ratio set for each battery cluster is within the distribution ratio constraint interval, determining the first to-be-adjusted current distribution ratio of each battery cluster within the distribution ratio constraint interval as the target current distribution ratio of the corresponding battery cluster.

Here, if the first to-be-adjusted current distribution ratio corresponding to each battery cluster is within the distribution ratio constraint interval, the currently calculated first to-be-adjusted current distribution ratio can be determined as the target current distribution ratio, so as to distribute current to the battery clusters according to the first to-be-adjusted current distribution ratio.

Step 1022b, if it is detected that the first to-be-adjusted current distribution ratio set for a battery cluster is not within the distribution ratio constraint interval, adjusting the capacity setting critical value, and re-determining, according to the current remaining capacity of each battery cluster and the adjusted capacity setting critical value, the first to-be-adjusted current distribution ratio set for each battery cluster, until the first to-be-adjusted current distribution ratio reset for each battery cluster is within the distribution ratio constraint interval, and determining the first to-be-adjusted current distribution ratio of each battery cluster within the distribution ratio constraint interval as the target current distribution ratio of the corresponding battery cluster.

That is, when it is detected that the first to-be-adjusted current distribution ratio corresponding to a battery cluster is not within the distribution ratio constraint interval, the capacity setting critical value can be adjusted. Exemplarily, the capacity setting critical value can be reduced, and then the first to-be-adjusted current distribution ratio set for each battery cluster is recalculated according to the calculation formula of the first to-be-adjusted current distribution ratio in step 1021, until the capacity setting critical value is adjusted to the minimum value of the capacity adjustment limit range. For example, the minimum value of the capacity adjustment limit range is 0. If it is detected, under the condition that the capacity setting critical value is within the capacity adjustment limit range, that the first to-be-adjusted current distribution ratio corresponding to each battery cluster is within the distribution ratio constraint interval, the currently determined first to-be-adjusted current distribution ratio can be determined as the target current distribution ratio.

Step 1023, if it is detected that the adjusted capacity setting critical value is not within the capacity adjustment limit range and the reset first to-be-adjusted current distribution ratio for a battery cluster is not within the distribution ratio constraint interval, determining, according to the current remaining capacity of each battery cluster, a second to-be-adjusted current distribution ratio set for each battery cluster.

Here, the current remaining capacities of all the battery clusters are summed to obtain a current remaining capacity sum value; and for each battery cluster, a ratio of the current remaining capacity corresponding to the battery cluster to the current remaining capacity sum value is calculated, and the ratio is determined as the second to-be-adjusted current distribution ratio.

Exemplarily, the second to-be-adjusted current distribution ratio of the i-th battery cluster is defined as I_{2i,pct}. Furthermore, the calculation formula of the second to-be-adjusted current distribution ratio of the i-th battery cluster I_{2i,pct} is as follows: ${I}_{2 i , pct} = \frac{{cap}_{i}}{{\sum }_{i = 1}^{n} {cap}_{i}} .$

Through the above formula, the second to-be-adjusted current distribution ratio corresponding to each battery cluster can be calculated, and the purpose of quickly distributing current to the battery clusters can be achieved according to the second to-be-adjusted current distribution ratio.

Step 1024, determining the target current distribution ratio according to whether the second to-be-adjusted current distribution ratio is within the distribution ratio constraint interval.

Step 1024 specifically comprises the following steps.

Step 1024a, if it is detected that the second to-be-adjusted current distribution ratio set for each battery cluster is within the distribution ratio constraint interval, determining the second to-be-adjusted current distribution ratio of each battery cluster within the distribution ratio constraint interval as the target current distribution ratio of the corresponding battery cluster.

Here, if the second to-be-adjusted current distribution ratio corresponding to each battery cluster is within the distribution ratio constraint interval, the currently calculated second to-be-adjusted current distribution ratio can be determined as the target current distribution ratio, so as to distribute current to the battery clusters according to the second to-be-adjusted current distribution ratio.

Step 1024b, if it is detected that the second to-be-adjusted current distribution ratio set for a battery cluster is not within the distribution ratio constraint interval, respectively determining a first battery cluster quantity corresponding to battery clusters whose second to-be-adjusted current distribution ratios are greater than the upper distribution ratio constraint limit, and a second battery cluster quantity corresponding to battery clusters whose second to-be-adjusted current distribution ratios are smaller than the lower distribution ratio constraint limit.

The battery cluster parameter comprises the distribution ratio constraint interval, and the distribution ratio constraint interval comprises the upper distribution ratio constraint limit and the lower distribution ratio constraint limit. The first battery cluster quantity can be determined according to the upper distribution ratio constraint limit, and the second battery cluster quantity can be determined according to the lower distribution ratio constraint limit.

Step 1024c, determining a distribution ratio adjustment value by which the second to-be-adjusted current distribution ratio not within the distribution ratio constraint interval is adjusted to the closest upper distribution ratio constraint limit or the closest lower distribution ratio constraint limit, so as to obtain a total distribution ratio adjustment value corresponding to all the battery clusters whose second to-be-adjusted current distribution ratios are not within the distribution ratio constraint interval.

The distribution ratio adjustment value by which the second to-be-adjusted current distribution ratio smaller than the lower distribution ratio constraint limit is adjusted to the lower distribution ratio constraint limit is a negative value, and the distribution ratio adjustment value by which the second to-be-adjusted current distribution ratio greater than the upper distribution ratio constraint limit is adjusted to the upper distribution ratio constraint limit is a positive value.

Here, a difference between the second to-be-adjusted current distribution ratio and the closest upper distribution ratio constraint limit or the closest lower distribution ratio constraint limit is calculated, and the difference is the distribution ratio adjustment value. Specifically, the difference can be positive or negative: the distribution ratio adjustment value obtained by making a difference between the second to-be-adjusted current distribution ratio smaller than the lower distribution ratio constraint limit and the lower distribution ratio constraint limit is a negative value; and the distribution ratio adjustment value obtained by making a difference between the second to-be-adjusted current distribution ratio greater than the upper distribution ratio constraint limit and the upper distribution ratio constraint limit is a positive value. The distribution ratio adjustment values corresponding to all the battery clusters whose second to-be-adjusted current distribution ratios are not within the distribution ratio constraint interval are summed to obtain the total distribution ratio adjustment value. Here, since the distribution ratio adjustment values include positive values and negative values, the calculated total distribution ratio adjustment value can be a positive value or a negative value.

Step 1025, determining the target current distribution ratio according to a magnitude relationship between the total distribution ratio adjustment value and a preset distribution ratio adjustment threshold.

Step 1025 specifically comprises the following steps.

Step 1025a, if the total distribution ratio adjustment value is smaller than or equal to the preset distribution ratio adjustment threshold, setting, according to the lower distribution ratio constraint limit, the total distribution ratio adjustment value and the second battery cluster quantity, the target current distribution ratio for the battery clusters whose second to-be-adjusted current distribution ratios are not within the distribution ratio constraint interval; and setting, according to the current remaining capacities of the battery clusters, the target current distribution ratio for the battery clusters whose second to-be-adjusted current distribution ratios are within the distribution ratio constraint interval.

Exemplarily, the preset distribution ratio adjustment threshold can be 0. For the second to-be-adjusted current distribution ratios corresponding to the respective battery clusters calculated through step 1023, the second to-be-adjusted current distribution ratios corresponding to some or all of the battery clusters are not within the distribution ratio constraint interval; then, for the battery clusters whose second to-be-adjusted current distribution ratios are not within the distribution ratio constraint interval, the new calculation manner involved in step 1025 is adopted to calculate the target current distribution ratio, while for the battery clusters whose second to-be-adjusted current distribution ratios are within the distribution ratio constraint interval, the calculation manner involved in step 1023 is continuously used to calculate the target current distribution ratio.

Here, if the total distribution ratio adjustment value is smaller than or equal to the preset distribution ratio adjustment threshold, for the battery clusters whose second to-be-adjusted current distribution ratios are not within the distribution ratio constraint interval, the following calculation manner is adopted to determine the target current distribution ratio.

A mean distribution ratio adjustment value is determined by using a ratio of the total distribution ratio adjustment value to the second battery cluster quantity; and the target current distribution ratio set for the battery clusters whose second to-be-adjusted current distribution ratios are not within the distribution ratio constraint interval is determined by using a sum value of the lower distribution ratio constraint limit and the mean distribution ratio adjustment value.

Exemplarily, the target current distribution ratio of the i-th battery cluster is defined as I_{32i,pct}, the second battery cluster quantity is n2, and the total distribution ratio adjustment value is Vol. Furthermore, the calculation formula of the target current distribution ratio of the i-th battery cluster I_{32i,pct} is as follows: $\left({I}_{32 i , pct}={I}_{pct_min}+\frac{1}{n 2}∗Vol\right) .$

Step 1025b, if the total distribution ratio adjustment value is smaller than or equal to the preset distribution ratio adjustment threshold, setting, according to the upper distribution ratio constraint limit, the total distribution ratio adjustment value and the first battery cluster quantity, the target current distribution ratio for the battery clusters whose second to-be-adjusted current distribution ratios are not within the distribution ratio constraint interval; and setting, according to the current remaining capacities of the battery clusters, the target current distribution ratio for the battery clusters whose second to-be-adjusted current distribution ratios are within the distribution ratio constraint interval.

Here, if the total distribution ratio adjustment value is smaller than or equal to the preset distribution ratio adjustment threshold, for the battery clusters whose second to-be-adjusted current distribution ratios are not within the distribution ratio constraint interval, the following calculation manner is adopted to determine the target current distribution ratio.

A mean distribution ratio adjustment value is determined by using a ratio of the total distribution ratio adjustment value to the first battery cluster quantity; and the target current distribution ratio set for the battery clusters whose second to-be-adjusted current distribution ratios are not within the distribution ratio constraint interval is determined by using a sum value of the upper distribution ratio constraint limit and the mean distribution ratio adjustment value.

Exemplarily, the target current distribution ratio of the i-th battery cluster is defined as I_{31i,pct}, the first battery cluster quantity is n1, and the total distribution ratio adjustment value is Vol. Furthermore, the calculation formula of the target current distribution ratio of the i-th battery cluster I_{31i,pct} is as follows: $\left({I}_{31 i , pct}={I}_{pct_max}+\frac{1}{n 1}∗Vol\right) .$

It should be noted that when the second to-be-adjusted current distribution ratio is not within the distribution ratio constraint interval, the target current distribution ratio is directly calculated through step 1025a or step 1025b according to the magnitude relationship between the total distribution ratio adjustment value and the preset distribution ratio adjustment threshold.

Step 1025c, if it is detected that the target current distribution ratio set for the battery clusters whose second to-be-adjusted current distribution ratios are not within the distribution ratio constraint interval is not within the distribution ratio constraint interval, recalculating the total distribution ratio adjustment value corresponding to all the battery clusters whose target current distribution ratios are not within the distribution ratio constraint interval; and
detecting the magnitude relationship between the recalculated total distribution ratio adjustment value and the preset distribution ratio adjustment threshold, and cyclically executing step 1025a and/or step 1025b, until a new target current distribution ratio reset for each battery cluster whose target current distribution ratio is not within the distribution ratio constraint interval is within the distribution ratio constraint interval.

The target current distribution ratio finally obtained through step 1025c can be ensured to be within the distribution ratio constraint interval, and no further calculation by other manners is needed.

Through the above manner, different calculation manners can be adopted under different parameter conditions to determine the target current distribution ratio, so that current can be accurately distributed to the respective battery clusters according to the target current distribution ratio, and battery clusters of different capacities can reach balance as soon as possible during operation.

In the embodiment of the present invention, there is also a case where the system parameter of the battery energy storage system does not satisfy the equal current distribution condition, for this case, processing is performed according to the following steps:
S201, under the condition that the system parameter of the battery energy storage system does not satisfy the equal current distribution condition, determining, according to the total battery cluster quantity of the plurality of battery clusters connected in parallel in the battery energy storage system, the distribution ratio constraint interval set for each battery cluster;
S202, determining, according to the battery cluster parameter, the target current distribution ratio set for each battery cluster, wherein the target current distribution ratio is within the distribution ratio constraint interval, and the battery cluster parameter comprises at least one of the following items: the current remaining capacity of the battery cluster, the capacity setting critical value and the distribution ratio constraint interval; and distributing current to the respective battery clusters according to the target current distribution ratio; and
S203, under the condition that the system parameter of the battery energy storage system satisfies the equal current distribution condition, determining, according to the total battery cluster quantity, an equal current distribution ratio set for each battery cluster; and distributing current to the respective battery clusters according to the equal current distribution ratio.

For the description of S202, reference can be made to the above embodiment, which is not repeated here.

In S201, the equal current distribution condition comprises one of the following items: the battery energy storage system is in a static working condition; the direct-current converter in the battery energy storage system is in a fault state; the minimum state of charge of the battery energy storage system during discharging is not greater than a first preset ratio; the maximum state of charge of the battery energy storage system during charging is not smaller than a second preset ratio, wherein the first preset ratio is smaller than the second preset ratio; and a state-of-charge difference is smaller than a preset difference threshold, wherein the state-of-charge difference represents a difference between the maximum state of charge and the minimum state of charge of all the battery clusters currently connected to the direct-current bus.

The battery management system (BMS) counts the total battery cluster quantity of the plurality of battery clusters connected in parallel, the initial states of charge of the respective battery clusters, the current remaining capacities of the respective battery clusters, and the system working condition and the like, wherein the system working condition comprises a static working condition, a charging working condition or a discharging working condition. Whether the system parameter of the battery energy storage system satisfies the equal current distribution condition is judged according to the above data counted by the BMS.

Exemplarily, to prevent the capacity difference among the current remaining capacities of the respective battery clusters in the battery energy storage system from being excessively large, the preset difference threshold is selected as a relatively small value, such as 1%.

Here, under the condition that the system parameter of the battery energy storage system does not satisfy the above equal current distribution condition, the distribution ratio constraint interval set for each battery cluster is determined according to the total battery cluster quantity of the plurality of battery clusters connected in parallel in the battery energy storage system. For the specific implementation, reference can be made to S101, which is not repeated here.

Furthermore, in S203, under the condition that the system parameter of the battery energy storage system satisfies the equal current distribution condition, the equal current distribution ratio set for each battery cluster is determined according to the total battery cluster quantity; and the current is distributed to the respective battery clusters according to the equal current distribution ratio.

That is, when the battery energy storage system is in a static working condition, the direct-current converter in the battery energy storage system is in a fault state, the minimum state of charge of the battery energy storage system during discharging is not greater than the first preset ratio, the maximum state of charge of the battery energy storage system during charging is not smaller than the second preset ratio, wherein the first preset ratio is smaller than the second preset ratio (exemplarily, the first preset ratio is 10%, and the second preset ratio is 90%), and the state-of-charge difference is smaller than the preset difference threshold, wherein the state-of-charge difference represents the difference between the maximum state of charge and the minimum state of charge of all the battery clusters currently connected to the direct-current bus, the equal current distribution ratio set for each battery cluster is directly determined according to the total battery cluster quantity.

Exemplarily, the equal current distribution ratio is determined through the following formula: ${I}_{i , pct} = \frac{1}{n}$
wherein n represents the total battery cluster quantity.

The equal current distribution ratio set for each battery cluster determined through the above manner can achieve quick current distribution to the respective battery clusters, which is relatively simple and convenient.

The embodiment of the present invention first defines the distribution ratio constraint interval set for each battery cluster, so that regardless of whether the difference among the initial states of charge of the respective battery clusters is excessively large, the target current distribution ratio set for each battery cluster can be controlled to be within the distribution ratio constraint interval, thereby avoiding excessively large differences among the target current distribution ratios of the respective battery clusters in the case of excessively large differences among the initial states of charge, which not only enables the states of charge of the respective battery clusters to reach consistency relatively quickly, but also avoids the problem that oscillation caused outside the battery energy storage system easily causes overload of the battery energy storage system when the differences among the current distribution ratios are relatively large. Then, the target current distribution ratio set for each battery cluster is determined according to the battery cluster parameter, wherein the battery cluster parameter comprises at least one of the following items: the current remaining capacity of the battery cluster, the capacity setting critical value and the distribution ratio constraint interval. The direct-current converter in the battery energy storage system can accurately distribute current to the respective battery clusters according to the target current distribution ratio through the above manner, and the target current distribution ratio can be configured as a limit ratio within the distribution ratio constraint interval, so that the direct-current converter performs charging and discharging with the allowable limit current, thereby ensuring that battery clusters of different capacities quickly reach balance during operation, and achieving the effect of improving the stability and reliability of the battery energy storage system.

In an optional embodiment, the alternating-current active power of each battery stack is calculated at the second hierarchy. To calculate the alternating-current active power of each battery stack, the embodiment of the present invention first calculates the direct-current active power of each battery stack, and then obtains the alternating-current active power of the battery stack by converting the active power.

When calculating the direct-current active power of the battery stacks, the embodiment of the present invention is mainly based on the preset first constraint condition. The first constraint condition here is that a current remaining capacity of any battery stack and a reference ratio of the battery stack are in a positive correlation relationship; and the reference ratio is a ratio of the direct-current active power of the battery stack to the direct-current voltage.

Here, the current remaining capacity of a battery stack is the sum of the current remaining capacities of the respective battery clusters in the battery stack, which can specifically be calculated in the following manner: ${Cap}_{i} = {\sum }_{j = 1}^{jmax} \left({Cap}_{ij}\right) .$

In specific implementation, the reference ratio in the embodiment of the present invention can be represented by a direct-current bus current, that is, the direct-current bus current is the ratio of the direct-current active power to the direct-current voltage. Furthermore, in the embodiment of the present invention, the current remaining capacity of any battery stack and the direct-current bus current of the battery stack are in a positive correlation relationship. On the basis that the current remaining capacity of any battery stack and the direct-current bus current of the battery stack are in a positive correlation relationship, the current remaining capacities of the respective battery stacks are acquired in the embodiment of the present invention, and the relative ratio among the direct-current bus currents can be obtained through the relative ratio among the current remaining capacities. For distinction, in the embodiment of the present invention, the relative ratio of the current remaining capacities among the respective battery stacks is referred to as a first relative ratio, and the relative ratio among the reference ratios (that is, the direct-current bus currents) of the respective battery stacks is referred to as a second relative ratio. Specifically, ${I}_{DC , 1} : {I}_{DC , 2} : ⋯ : {I}_{DC , i} = {Cap}_{1} : {Cap}_{2} : ⋯ : {Cap}_{i} .$

In the embodiment of the present invention, the positive correlation relationship between the current remaining capacity of any battery stack and the direct-current bus current of the battery stack is determined by the connection relationship of the battery energy storage system in the embodiment of the present invention. In the battery energy storage system in the embodiment of the present invention, since the respective battery stacks are mutually independent and have independent thermal management systems, only simultaneous full charging or simultaneous full discharging of different battery stacks during parallel operation is considered, and an excessively large difference of the direct-current bus current within the maximum power allowable range does not affect the battery consistency. To achieve simultaneous full charging or full discharging of the battery stacks, the direct-current bus current ratio is determined by the capacity.

After the second relative ratio among the direct-current bus currents of the respective battery stacks is determined, in combination with the direct-current voltages acquired in the embodiment of the present invention, the ratio among the direct-current active powers of the respective battery stacks can be calculated after combining the direct-current voltage of each battery stack with the second relative ratio of the battery stack; and then in combination with the power balance principle (the total power input of the battery energy storage system is equal to the total power output; the total power input is the first actual alternating-current power of all the battery stacks; and the total power output is the sum of the direct-current active power of each battery stack), the direct-current active power of each battery stack can be obtained by distributing the first actual alternating-current power to the respective battery stacks according to the second relative ratio. After the direct-current active power of each battery stack is obtained, the direct-current active power is converted to obtain the alternating-current active power of the battery stack.

In an optional embodiment, since there are factors such as loss during the use of electric energy, to improve the accuracy, the embodiment of the present invention further needs to consider the actual working efficiency of the PCS. That is, when the direct-current active power is calculated on the basis of the power balance principle, the total power input here is the first actual alternating-current power of all the battery stacks; and the total power output here is the sum of the direct-current active power of each battery stack under the actual working efficiency (P_{AC,i} multiplied by ηᵢ). When the direct-current active power is converted, the actual working efficiency of the PCS also needs to be considered, and the conversion is performed on the basis of the working efficiency.

To improve the efficiency of calculating the direct-current active power, the embodiment of the present invention adopts a manner of constructing a matrix operation expression. Specifically, the second relative ratio among the reference ratios of the respective battery stacks, the first actual alternating-current power and the direct-current voltage of each bidirectional energy storage converter serve as known quantities, and the direct-current active power of each of the battery stacks serves as a variable to be solved; a first matrix operation expression is constructed on the basis of the power balance principle; and the first matrix operation expression is solved to obtain the direct-current active power of each of the battery stacks.

The constructed first matrix operation expression is specifically that a product of the first known matrix and the first matrix to be solved is equal to the second known matrix, wherein the first known matrix is constructed according to the second relative ratio among the reference ratios of the respective battery stacks, and the direct-current voltage and the working efficiency of each bidirectional energy storage converter; the second known matrix is constructed according to the first actual alternating-current power; and the first matrix to be solved is constructed according to the direct-current active power of each of the battery stacks.

In specific implementation, the maximum power PO of the battery system is first obtained by acquiring and converting through the BMS, specifically: ${\sum }_{i = 1}^{imax} {P}_{AC , i , max} = {\sum }_{i = 1}^{imax} \frac{{P}_{DC , i , max}}{{η}_{i}} = {P}_{0} .$

The actual charging and discharging operation power P* of the energy storage battery system needs to be set manually, or obtained from a power grid dispatching instruction or an optimization algorithm, but must satisfy: $P * \leq {P}_{0} .$

The power balance principle in this embodiment can be expressed as: ${\sum }_{i = 1}^{imax} {P}_{AC , i} = {\sum }_{i = 1}^{imax} \frac{{P}_{DC , i}}{{η}_{i}} = P * .$

The first matrix operation expression constructed on the basis of the power balance principle is: A * x = b, specifically: $\left[\begin{matrix}\frac{1}{{η}_{1}} & \frac{1}{{η}_{2}} & \frac{1}{{η}_{3}} & ⋯ & \frac{1}{{η}_{imax}} \\ \frac{1}{{U}_{DC 1}} & - \frac{{Cap}_{1}}{{Cap}_{2}} ⋅ \frac{1}{{U}_{DC 2}} & 0 & ⋯ & 0 \\ \frac{1}{{U}_{DC 1}} & 0 & - \frac{{Cap}_{1}}{{Cap}_{2}} ⋅ \frac{1}{{U}_{DC 3}} & ⋯ & 0 \\ ⋮ & ⋮ & ⋮ & ⋱ & ⋮ \\ \frac{1}{{U}_{DC 1}} & 0 & 0 & ⋯ & - \frac{{Cap}_{1}}{{Cap}_{imax}} ⋅ \frac{1}{{U}_{DCimax}}\end{matrix}\right] \left[\begin{matrix}{P}_{DC 1} \\ {P}_{DC 2} \\ {P}_{DC 3} \\ ⋮ \\ {P}_{DC imax}\end{matrix}\right] = \left[\begin{matrix}P * \\ 0 \\ 0 \\ ⋮ \\ 0\end{matrix}\right]$
wherein the variables to be solved: x = A⁻¹ * b. By solving x, the alternating-current active power of each of the battery stacks can be obtained.

The conversion of the alternating-current active power of each of the battery stacks can be performed in the following manner: $\left[\begin{matrix}{P}_{AC 1} \\ {P}_{AC 2} \\ {P}_{AC 3} \\ ⋮ \\ {P}_{ACimax}\end{matrix}\right] = \left[\begin{matrix}\frac{1}{{η}_{1}} & 0 & 0 & ⋯ & 0 \\ 0 & \frac{1}{{η}_{2}} & 0 & ⋯ & 0 \\ 0 & 0 & \frac{1}{{η}_{3}} & ⋯ & 0 \\ ⋮ & ⋮ & ⋮ & ⋱ & ⋮ \\ 0 & 0 & 0 & ⋯ & \frac{1}{{η}_{imax}}\end{matrix}\right] \left[\begin{matrix}{P}_{DC 1} \\ {P}_{DC 2} \\ {P}_{DC 3} \\ ⋮ \\ {P}_{DCimax}\end{matrix}\right] .$

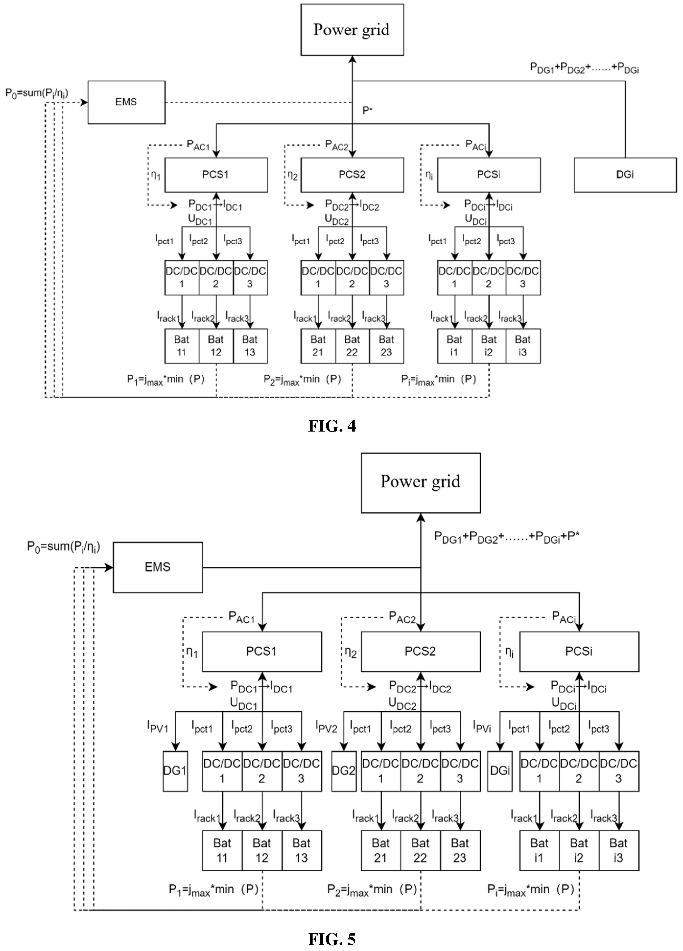

In an optional embodiment, the battery energy storage system in the embodiment of the present invention may also be alternating-current coupled with another energy power supply system, and the connection manner thereof is shown in FIG. 4, in which the other energy power supply system is connected in parallel to the alternating-current side of the PCS. The battery energy storage system in the embodiment of the present invention may also be direct-current coupled with another energy power supply system, and the connection manner thereof is shown in FIG. 5: each other energy power supply system is individually connected in parallel to each direct-current bus and then inverted to the alternating-current side via the PCS, so the efficiency corresponding to each direct-current energy power supply system should be consistent with the alternating-current/direct-current conversion efficiency of the energy storage system, which is determined by the PCS. For this case, when calculating the alternating-current active power of each of the battery stacks, the embodiment of the present invention needs to exclude the direct current of the other energy power supply system. The greatest difference from the above embodiment lies in the constraint condition and the considered parameter. For distinction, the constraint condition here is referred to as a second constraint condition. Specifically, the second constraint condition is that a current remaining capacity of any battery stack and a reference difference of the battery stack are in a positive correlation relationship; the reference difference is a difference between a first ratio and a second ratio; and the first ratio is a ratio of the direct-current active power of the battery stack to the direct-current voltage, and the second ratio is a ratio of the direct-current active power of the other direct-current energy to the direct-current voltage. Here, the considered parameter is mainly embodied in the second actual alternating-current power of the other direct-current power supply system.

Here, the ratio of the direct-current active power of a battery stack to the direct-current voltage can still be represented by the direct-current bus current (I_{DC,i}) of each direct-current bus in the above embodiment. The ratio of the direct-current active power of the other direct-current energy to the direct-current voltage can be represented by the direct-current current (I_{DG}) of the other energy power supply system of each stack. In the embodiment of the present invention, the current remaining capacities of the respective battery stacks are acquired, and the relative ratio among the differences between the direct-current bus current and the direct-current current of the other energy power supply system can be obtained through the relative ratio among the current remaining capacities. For distinction, the relative ratio among the relative differences is referred to as a third relative ratio.

On the basis that the current remaining capacity of a battery stack and the reference difference of the battery stack are in a positive correlation relationship, the third relative ratio among the relative differences here is obtained according to the acquired first relative ratio among the current remaining capacities of the battery stacks, which can specifically be expressed by the following formula: $\frac{{I}_{Bat 1}}{{I}_{Bat 2}} = \frac{{I}_{DC 1} - {I}_{DG 1}}{{I}_{DC 2} - {I}_{DG 2}} = \frac{{Cap}_{1}}{{Cap}_{2}} .$

It can also be specifically embodied as: $\frac{\frac{{P}_{DC 1}}{{U}_{DC 1}} - \frac{{P}_{DG 1}}{{U}_{DC 1}}}{\frac{{P}_{DC 2}}{{U}_{DC 2}} - \frac{{P}_{DG 2}}{{U}_{DC 2}}} = \frac{{Cap}_{1}}{{Cap}_{2}} .$

After the third relative ratio among the relative differences is determined, in combination with the direct-current voltages acquired in the embodiment of the present invention, the ratio among the direct-current active powers of the respective battery stacks can be calculated after combining the direct-current voltage of each battery stack with the third relative ratio of the battery stack; and then in combination with the power balance principle (the power balance principle is that the total power input of the battery energy storage system and the other energy power supply systems is equal to the total power output; the total power input is the first actual alternating-current power of all the battery stacks and the second actual alternating-current power of the other energy power supply system, and the total power input is the sum of the direct-current active power of each battery stack and the second actual alternating-current power of the other energy power supply system), the direct-current active power of each battery stack can be obtained by distributing the first actual alternating-current power to the respective battery stacks according to the third relative ratio. After the direct-current active power of each battery stack is obtained, the direct-current active power is converted to obtain the alternating-current active power of the battery stack.

In an optional embodiment, since there are factors such as loss during the use of electric energy, to improve the accuracy, the embodiment of the present invention further needs to consider the actual working efficiency of the PCS. That is, when the direct-current active power is calculated on the basis of the power balance principle, the total power input here is the first actual alternating-current power of all the battery stacks; and the total power output here is the sum of the direct-current active power of each battery stack under the actual working efficiency (P_{AC,i} multiplied by ηᵢ). When the direct-current active power is converted, the actual working efficiency of the PCS also needs to be considered, and the conversion is performed on the basis of the working efficiency.

To improve the efficiency of calculating the direct-current active power, the embodiment of the present invention adopts a manner of constructing a matrix operation expression. Specifically, the third relative ratio, the first actual alternating-current power, the direct-current active power of each other direct-current energy system and the direct-current voltage of each bidirectional energy storage converter serve as known quantities, and the direct-current active power of each of the battery stacks serves as a variable to be solved; and a second matrix operation expression is constructed on the basis of the power balance principle; and the second matrix operation expression is solved to obtain the direct-current active power of each of the battery stacks.

The constructed second matrix operation expression is specifically that a product of the third known matrix and the second matrix to be solved is equal to the fourth known matrix, wherein the third known matrix is constructed according to the third relative ratio among the reference differences of the respective battery stacks, and the direct-current voltage and the working efficiency of each bidirectional energy storage converter; the fourth known matrix is constructed according to the first actual alternating-current power, the second actual alternating-current power and the direct-current active power of each other direct-current energy system; and the second matrix to be solved is constructed according to the direct-current active power of each of the battery stacks and the direct-current active power of each other direct-current energy system.

In specific implementation, the power balance principle in this embodiment can be expressed as: ${\sum }_{i = 1}^{imax} {P}_{AC , i} = {\sum }_{i = 1}^{imax} \frac{{P}_{DC , i}}{{η}_{i}} = P * .$

The second matrix operation expression constructed on the basis of the power balance principle is: A * x = b, specifically: $\left[\begin{matrix}\frac{1}{{η}_{1}} & \frac{1}{{η}_{2}} & ⋯ & \frac{1}{{η}_{imax}} & \frac{1}{{η}_{1}} & \frac{1}{{η}_{2}} & ⋯ & \frac{1}{{η}_{imax}} \\ \frac{1}{{U}_{DC 1}} & - \frac{{Cap}_{1}}{{Cap}_{2}} ⋅ \frac{1}{{U}_{DC 2}} & ⋯ & 0 & - \frac{1}{{U}_{DC 1}} & \frac{{Cap}_{1}}{{Cap}_{2}} ⋅ \frac{1}{{U}_{DC 2}} & ⋯ & 0 \\ ⋮ & ⋮ & ⋱ & ⋮ & & ⋮ & ⋱ & ⋮ \\ \frac{1}{{U}_{DC 1}} & 0 & ⋯ & - \frac{{Cap}_{1}}{{Cap}_{imax}} ⋅ \frac{1}{{U}_{DCimax}} & - \frac{1}{{U}_{DC 1}} & 0 & ⋯ & \frac{{Cap}_{1}}{{Cap}_{imax}} ⋅ \frac{1}{{U}_{DCimax}} \\ 0 & 0 & ⋯ & 0 & 1 & 0 & ⋯ & 0 \\ 0 & 0 & ⋯ & 0 & 0 & 1 & ⋯ & 0 \\ ⋮ & ⋮ & ⋱ & ⋮ & ⋮ & ⋮ & ⋱ & ⋮ \\ 0 & ⋯ & ⋯ & 0 & 0 & 0 & ⋯ & 1\end{matrix}\right] \left[\begin{matrix}{P}_{DC 1} \\ {P}_{DC 2} \\ ⋮ \\ {P}_{D Cimax} \\ {P}_{DG 1} \\ {P}_{DG 2} \\ ⋮ \\ {P}_{DGimax}\end{matrix}\right] = \left[\begin{matrix}P * + {ΣP}_{DGi} \\ 0 \\ ⋮ \\ 0 \\ {P}_{DG 1} \\ {P}_{DG 2} \\ ⋮ \\ {P}_{DGimax}\end{matrix}\right]$
wherein the variables to be solved: x = A⁻¹ * b. By solving x, the alternating-current active power of each of the battery stacks can be obtained.

The conversion of the alternating-current active power of each of the battery stacks can be performed in the following manner: $\left[\begin{matrix}{P}_{AC 1} \\ {P}_{AC 2} \\ {P}_{AC 3} \\ ⋮ \\ {P}_{ACimax}\end{matrix}\right] = \left[\begin{matrix}\frac{1}{{η}_{1}} & 0 & 0 & ⋯ & 0 \\ 0 & \frac{1}{{η}_{2}} & 0 & ⋯ & 0 \\ 0 & 0 & \frac{1}{{η}_{3}} & ⋯ & 0 \\ ⋮ & ⋮ & ⋮ & ⋱ & ⋮ \\ 0 & 0 & 0 & ⋯ & \frac{1}{{η}_{imax}}\end{matrix}\right] \left[\begin{matrix}{P}_{DC 1} \\ {P}_{DC 2} \\ {P}_{DC 3} \\ ⋮ \\ {P}_{DCimax}\end{matrix}\right] .$

In the present invention, the calculation manner in the case where the battery energy storage system is alternating-current coupled with another energy power supply system is the same as the calculation manner in the case of direct-current coupling with another energy power supply system, which is not repeated here.

In the grid-connected PQ control mode of the PCS, the present invention calculates the current ratio of the direct-current bus corresponding to each stack through the remaining available capacity Capᵢ of all the battery stacks, aggregates the minimum power of each stack reported by the BMS to the EMS to calculate the total power of the energy storage system, and adjusts the active power given value of each PCS without affecting the charging and discharging power of the energy storage system. In consideration of the different working efficiencies of the respective PCSs and the inconsistency of direct-current bus voltages caused by the inconsistency of the batteries themselves, the direct-current bus current is reasonably and accurately distributed and controlled, so that the state of being simultaneously fully charged or fully discharged between stacks is achieved, and the depth of charge and discharge of the entire system is ensured. Meanwhile, relatively large differences in direct-current bus current among different PCSs are allowed, because the stacks have mutually independent thermal management systems, and relatively large differences in working current do not cause relatively large consistency differences among battery clusters.

Meanwhile, by reasonably distributing the current ratio to different battery clusters of each stack, different available capacity socs of different battery clusters in a same battery stack can quickly converge to be consistent with the maximum capability within the allowable working current range under the DC/DC and the distributed current ratio, thereby reducing the capacity and soc differences among different battery clusters in the same battery stack.

On the one hand, in the present invention, the current of each direct-current bus is controlled by controlling the active power given value of each PCS, so that the battery stacks are simultaneously fully charged or fully discharged; on the other hand, in cooperation with the DC/DC current distribution algorithm, the current ratio of battery clusters in the same stack is distributed to reduce system differences, thereby greatly improving the consistency, service life, working efficiency and depth of charge and discharge of the entire energy storage system.

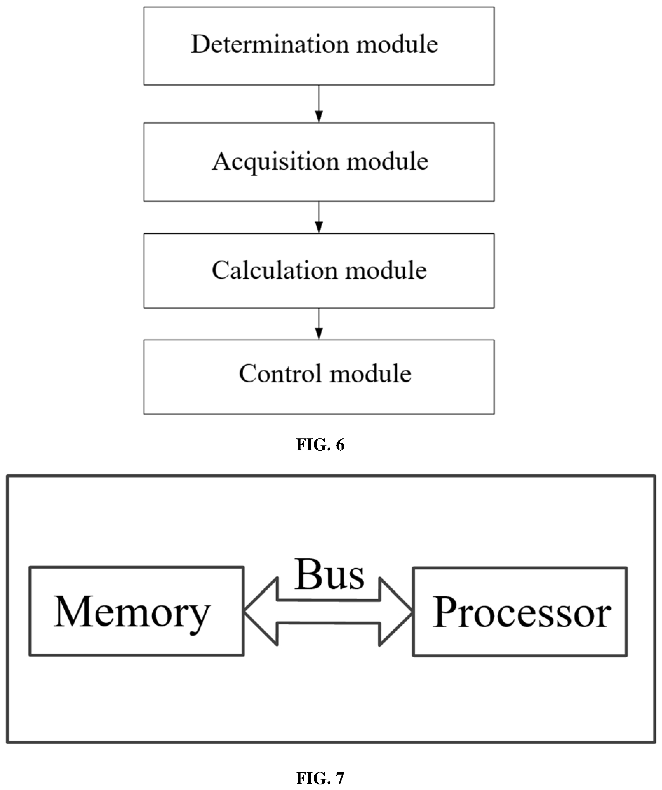

FIG. 6 shows a schematic structural diagram of a control apparatus provided by an embodiment of the present invention, acting on a battery energy storage system, wherein the battery energy storage system comprises a plurality of battery stacks and an energy storage manager; each of the battery stacks comprises a bidirectional energy storage converter, a plurality of direct-current power converters and a plurality of battery clusters; each battery cluster is sequentially connected to an alternating-current power grid via the direct-current power converter and the bidirectional energy storage converter that correspond to the battery cluster; and the energy storage manager is in signal connection with each direct-current power converter and each bidirectional energy storage converter, respectively. The apparatus comprises:
a determination module, configured to determine, for each of the battery stacks, a target current distribution ratio set for each battery cluster according to a battery cluster parameter of each battery cluster in the battery stack;
an acquisition module, configured to acquire in real time current remaining capacities of the respective battery stacks, a first actual alternating-current power of all the battery stacks, and a direct-current voltage of each bidirectional energy storage converter;
a calculation module, configured to calculate, according to a preset first constraint condition and on the basis of the acquired first actual alternating-current power, the current remaining capacities and the direct-current voltages, alternating-current active power of each of the battery stacks; and
a control module, configured to issue the alternating-current active power to the corresponding bidirectional energy storage converter, so as to adjust current distributed by each of the bidirectional energy storage converters, and control each of the direct-current power converters on the basis of the target current distribution ratio, so as to adjust current distributed to each battery cluster.

The calculating, according to a preset first constraint condition and on the basis of the acquired first actual alternating-current power, the current remaining capacities and the direct-current voltages, alternating-current active power of each of the battery stacks comprises:
calculating direct-current active power of the battery stacks on the basis of a power balance principle and according to the first actual alternating-current power, the current remaining capacities, the direct-current voltages and the first constraint condition; and
calculating the alternating-current active power of each of the battery stacks according to the direct-current active power of the battery stacks and a working efficiency of each bidirectional energy storage converter.

The first constraint condition is that a current remaining capacity of any battery stack and a reference ratio of the battery stack are in a positive correlation relationship; and the reference ratio is a ratio of the direct-current active power of the battery stack to the direct-current voltage.

The calculating direct-current active power of the battery stacks on the basis of a power balance principle and according to the first actual alternating-current power, the current remaining capacities, the direct-current voltages and the first constraint condition comprises:
on the basis that a current remaining capacity of any battery stack and a reference ratio of the battery stack are in a positive correlation relationship, determining, according to a first relative ratio of the current remaining capacities among the respective battery stacks, a second relative ratio among the reference ratios of the respective battery stacks; and
calculating, on the basis of the power balance principle and according to the second relative ratio among the reference ratios of the respective battery stacks, the first actual alternating-current power and the direct-current voltage of each bidirectional energy storage converter, the direct-current active power of each of the battery stacks.

The calculating, on the basis of the power balance principle and according to the second relative ratio among the reference ratios of the respective battery stacks, the first actual alternating-current power and the direct-current voltage of each bidirectional energy storage converter, the direct-current active power of each of the battery stacks comprises:
constructing a first matrix operation expression on the basis of the power balance principle, wherein the second relative ratio among the reference ratios of the respective battery stacks, the first actual alternating-current power and the direct-current voltage of each bidirectional energy storage converter serve as known quantities, and the direct-current active power of each of the battery stacks serves as a variable to be solved; and
solving the first matrix operation expression to obtain the direct-current active power of each of the battery stacks.

The first matrix operation expression comprises a first known matrix, a second known matrix and a first matrix to be solved; and the constructing a first matrix operation expression on the basis of the power balance principle comprises:
constructing the first known matrix according to the second relative ratio among the reference ratios of the respective battery stacks, and the direct-current voltage and the working efficiency of each bidirectional energy storage converter;
constructing the second known matrix according to the first actual alternating-current power; and
constructing the first matrix to be solved according to the direct-current active power of each of the battery stacks,
wherein a product of the first known matrix and the first matrix to be solved is equal to the second known matrix.

The calculating the alternating-current active power of each of the battery stacks according to the direct-current active power of the battery stacks and the working efficiency of each bidirectional energy storage converter comprises:
determining, according to the working efficiency of each bidirectional energy storage converter, a conversion ratio corresponding to the direct-current active power of the bidirectional energy storage converter; and
converting the direct-current active power of the bidirectional energy storage converter into the alternating-current active power of the battery stack according to the conversion ratio.

The power balance principle is that a total power input of the battery energy storage system is equal to a total power output; the total power input is the first actual alternating-current power of all the battery stacks; and the total power output is a sum of the direct-current active power of each battery stack.

The first actual alternating-current power of all the battery stacks is acquired in the following manner:
the energy storage manager acquires sub alternating-current power of each battery stack;
all the sub alternating-current powers are aggregated together to obtain a first total power of all the battery stacks; and
the first actual alternating-current power is obtained by performing actual loss-removal processing on the first total power.

The bidirectional energy storage converter is further connected to another energy power supply system; and
the alternating-current active power of each of the battery stacks is calculated in the following manner, comprising:
calculating, by the energy storage manager according to a preset second constraint condition and on the basis of the acquired first actual alternating-current power, a second actual alternating-current power of another direct-current energy system, the current remaining capacities and the direct-current voltages, the alternating-current active power of each of the battery stacks.

The calculating, by the energy storage manager according to a preset second constraint condition and on the basis of the acquired first actual alternating-current power, the second actual alternating-current power of the other direct-current energy system, the current remaining capacities and the direct-current voltages, the alternating-current active power of each of the battery stacks comprises:
calculating direct-current active power of the battery stacks on the basis of a power balance principle and according to the first actual alternating-current power, the second actual alternating-current power, the current remaining capacities, the direct-current voltages, direct-current active power of each other direct-current energy system and the second constraint condition; and
calculating the alternating-current active power of each of the battery stacks according to the direct-current active power of the battery stacks and a working efficiency of each bidirectional energy storage converter.

The second constraint condition is that a current remaining capacity of any battery stack and a reference difference of the battery stack are in a positive correlation relationship; the reference difference is a difference between a first ratio and a second ratio; and the first ratio is a ratio of direct-current active power of the battery stack to the direct-current voltage, and the second ratio is a ratio of direct-current active power of the other direct-current energy to the direct-current voltage.

The calculating direct-current active power of the battery stacks on the basis of a power balance principle and according to the first actual alternating-current power, the second actual alternating-current power, the current remaining capacities, the direct-current voltages, the direct-current active power of each other direct-current energy system and the second constraint condition comprises:
on the basis that a current remaining capacity of a battery stack and a reference difference of the battery stack are in a positive correlation relationship, calculating, according to a first relative ratio among the current remaining capacities of the respective battery stacks, a third relative ratio among reference differences of the respective battery stacks; and
calculating, on the basis of the power balance principle and according to the third relative ratio, the first actual alternating-current power, the second actual alternating-current power, the direct-current active power of each other direct-current energy system and the direct-current voltage of each bidirectional energy storage converter, the direct-current active power of each of the battery stacks.

The calculating, on the basis of the power balance principle and according to the third relative ratio, the first actual alternating-current power, the second actual alternating-current power, the direct-current active power of each other direct-current energy system and the direct-current voltage of each bidirectional energy storage converter, the direct-current active power of each of the battery stacks comprises:
constructing a second matrix operation expression on the basis of the power balance principle, wherein the third relative ratio, the first actual alternating-current power, the direct-current active power of each other direct-current energy system and the direct-current voltage of each bidirectional energy storage converter serve as known quantities, and the direct-current active power of each of the battery stacks serves as a variable to be solved; and
solving the second matrix operation expression to obtain the direct-current active power of each of the battery stacks.

The second matrix operation expression comprises a third known matrix, a fourth known matrix and a second matrix to be solved; and the constructing a second matrix operation expression on the basis of the power balance principle comprises:
constructing the third known matrix according to the third relative ratio among the reference differences of the respective battery stacks, and the direct-current voltage and the working efficiency of each bidirectional energy storage converter;
constructing the fourth known matrix according to the first actual alternating-current power, the second actual alternating-current power and the direct-current active power of each other direct-current energy system; and
constructing the second matrix to be solved according to the direct-current active power of each of the battery stacks and the direct-current active power of each other direct-current energy system,
wherein a product of the third known matrix and the second matrix to be solved is equal to the fourth known matrix.

The calculating the alternating-current active power of each of the battery stacks according to the direct-current active power of the battery stacks and the working efficiency of each bidirectional energy storage converter comprises:
determining, according to the working efficiency of each bidirectional energy storage converter, a conversion ratio corresponding to the direct-current active power of the bidirectional energy storage converter; and
converting the direct-current active power of the bidirectional energy storage converter into the alternating-current active power of the battery stack according to the conversion ratio.

The power balance principle is that a total power input of the battery energy storage system and the other energy power supply systems is equal to a total power output; and the total power input is the first actual alternating-current power of all the battery stacks and the second actual alternating-current power of the other energy power supply system, and the total power input is a sum of the direct-current active power of each battery stack and the second actual alternating-current power of the other energy power supply system.

The target current distribution ratio is within a distribution ratio constraint interval, and the battery cluster parameter comprises at least one of the following items: a current remaining capacity of a battery cluster, a capacity setting critical value, and a distribution ratio constraint interval set for each battery cluster and determined according to a total battery cluster quantity of a plurality of battery clusters connected in parallel in the battery energy storage system.

The determining, according to the total battery cluster quantity of the plurality of battery clusters connected in parallel in the battery energy storage system, the distribution ratio constraint interval set for each battery cluster comprises:
under the condition that a system parameter of the battery energy storage system does not satisfy an equal current distribution condition, determining, according to the total battery cluster quantity of the plurality of battery clusters connected in parallel in the battery energy storage system, the distribution ratio constraint interval set for each battery cluster.

The determining, according to the total battery cluster quantity of the plurality of battery clusters connected in parallel in the battery energy storage system, the distribution ratio constraint interval set for each battery cluster comprises:
acquiring the total battery cluster quantity of the plurality of battery clusters connected in parallel in the battery energy storage system and an overload constraint ratio of the battery energy storage system, wherein the overload constraint ratio represents a preset ratio by which current of a battery cluster in a charging or discharging process exceeds a rated current range; and
determining, according to the overload constraint ratio, an upper distribution ratio constraint limit and a lower distribution ratio constraint limit of the battery energy storage system, so as to determine the distribution ratio constraint interval set for each battery cluster.

The battery cluster parameter comprises the current remaining capacity of the battery cluster and the capacity setting critical value, wherein the capacity setting critical value represents that states of charge of the respective battery clusters in the battery energy storage system converge to be consistent fastest; and
the determining, according to the battery cluster parameter, the target current distribution ratio set for each battery cluster comprises:
determining, according to the current remaining capacity of each battery cluster and the capacity setting critical value, a first to-be-adjusted current distribution ratio set for each battery cluster; and
determining the target current distribution ratio according to whether the first to-be-adjusted current distribution ratio is within the distribution ratio constraint interval.

Each battery cluster corresponds to one of the direct-current power converters, and each battery stack corresponds to one of the bidirectional energy storage converters, wherein the battery cluster and the direct-current power converter corresponding to the battery cluster are packaged together.

As shown in FIG. 7, an embodiment of the present invention provides an electronic device, configured to execute the control method of the present invention, the device comprising a memory, a processor, a bus, and a computer program stored on the memory and executable on the processor, wherein the processor implements the steps of the above control method when executing the computer program.

Specifically, the memory and the processor can be a general memory and a general processor, which are not specifically limited here; and when the processor runs the computer program stored in the memory, the above control method can be executed.

Corresponding to the control method of the present invention, an embodiment of the present invention further provides a computer-readable storage medium, wherein the computer-readable storage medium stores a computer program, and the computer program executes the steps of the above control method when being run by a processor.

Specifically, the storage medium can be a general storage medium, such as a mobile disk and a hard disk; and when the computer program on the storage medium is run, the above control method can be executed.

In the embodiments provided by the present invention, it should be understood that the disclosed system and method can be implemented in other manners. The system embodiments described above are merely schematic; for example, the division of the units is merely a logical function division, and there can be another division manner in actual implementation; for another example, a plurality of units or components can be combined or integrated into another system, or some features can be ignored or not executed. In addition, the mutual coupling or direct coupling or communication connection shown or discussed can be indirect coupling or communication connection through some communication interfaces, systems or units, and can be in electrical, mechanical or other forms.

The units described as separate components can or cannot be physically separated, and the components displayed as units can or cannot be physical units, that is, can be located in one place or distributed over a plurality of network units. Some or all of the units can be selected according to actual needs to achieve the purpose of the solution of this embodiment.

In addition, the functional units in the embodiments provided by the present invention can be integrated into one processing unit, or each unit can exist physically alone, or two or more units can be integrated into one unit.

If the functions are implemented in the form of software functional units and sold or used as independent products, the functions can be stored in a computer-readable storage medium. Based on such understanding, the technical solution of the present invention, in essence or in other words, the part contributing to the prior art or the part of the technical solution can be embodied in the form of a software product, and the computer software product is stored in a storage medium and comprises several instructions for enabling a computer device (which can be a personal computer, a server, a network device or the like) to execute all or part of the steps of the method described in the embodiments of the present invention. The aforementioned storage medium comprises various media capable of storing program codes, such as a USB flash disk, a mobile hard disk, a read-only memory (ROM), a random access memory (RAM), a magnetic disk or an optical disk.

It should be noted that similar reference numerals and letters represent similar items in the following drawings, and therefore, once an item is defined in one drawing, it does not need to be further defined and explained in the subsequent drawings; in addition, the terms "first", "second", "third" and the like are only used for distinguishing description, and cannot be understood as indicating or implying relative importance.

Finally, it should be noted that the above embodiments are merely specific implementations of the present invention, which are used to illustrate the technical solution of the present invention rather than limit it, and the protection scope of the present invention is not limited thereto; although the present invention has been described in detail with reference to the foregoing embodiments, those of ordinary skill in the art should understand that any person skilled in the art can still modify the technical solutions recorded in the foregoing embodiments or easily conceive changes, or make equivalent replacements for some of the technical features within the technical scope disclosed by the present invention; and these modifications, changes or replacements do not make the essence of the corresponding technical solutions depart from the spirit and scope of the technical solutions of the embodiments of the present invention, and should all be covered within the protection scope of the present invention. Therefore, the protection scope of the present invention shall be subject to the protection scope of the claims.

### INDUSTRIAL APPLICABILITY

The method of the present invention comprises: for each of the battery stacks, determining, by the energy storage manager according to a battery cluster parameter of each battery cluster in the battery stack, a target current distribution ratio set for each battery cluster; acquiring, by the energy storage manager in real time, current remaining capacities of the respective battery stacks, a first actual alternating-current power of all the battery stacks, and a direct-current voltage of each bidirectional energy storage converter; calculating, by the energy storage manager according to a preset first constraint condition and on the basis of the acquired first actual alternating-current power, the current remaining capacities and the direct-current voltages, alternating-current active power of each of the battery stacks; and issuing, by the energy storage manager, the alternating-current active power to the corresponding bidirectional energy storage converter, so as to adjust current distributed by each of the bidirectional energy storage converters, and controlling each of the direct-current power converters on the basis of the target current distribution ratio, so as to adjust current distributed to each battery cluster.

In the present invention, by controlling the alternating-current active power issued to the bidirectional energy storage converters to be a given value, the current of each direct-current bus is controlled, so that the battery stacks are simultaneously fully charged or fully discharged. In addition, the current is distributed on the basis of the current ratio of battery clusters in the same stack to reduce system differences, thereby greatly improving the consistency, service life, working efficiency and depth of charge and discharge of the entire battery energy storage system.

In addition, it can be understood that the control method and apparatus, the electronic device, and the storage medium provided by the embodiments of the present invention are reproducible and can be used in various industrial applications. For example, the control method and apparatus, the electronic device, and the storage medium provided by the embodiments of the present invention can be used in the technical field involving circuit control.

## Claims

1. A control method, **characterized in that** the control method acts on a battery energy storage system, wherein the battery energy storage system comprises a plurality of battery stacks and an energy storage manager; each of the battery stacks comprises a bidirectional energy storage converter, a plurality of direct-current power converters and a plurality of battery clusters; each battery cluster is sequentially connected to an alternating-current power grid via the direct-current power converter and the bidirectional energy storage converter that correspond to the battery cluster; and the energy storage manager is in signal connection with each direct-current power converter and each bidirectional energy storage converter, respectively; and the control method comprises:
for each of the battery stacks, determining, by the energy storage manager according to a battery cluster parameter of each battery cluster in the battery stack, a target current distribution ratio set for each battery cluster;
acquiring, by the energy storage manager in real time, current remaining capacities of the respective battery stacks, a first actual alternating-current power of all the battery stacks, and a direct-current voltage of each bidirectional energy storage converter;
calculating, by the energy storage manager according to a preset first constraint condition and based on the acquired first actual alternating-current power, the current remaining capacities and the direct-current voltages, an alternating-current active power of each of the battery stacks; and
issuing, by the energy storage manager, the alternating-current active power to the corresponding bidirectional energy storage converter, so as to adjust a current distributed by each of the bidirectional energy storage converters, and controlling each of the direct-current power converters based on the target current distribution ratio, so as to adjust a current distributed to each battery cluster.

2. The control method according to claim 1, wherein the calculating, by the energy storage manager according to the preset first constraint condition and based on the acquired first actual alternating-current power, the current remaining capacities and the direct-current voltages, the alternating-current active power of each of the battery stacks comprises:
calculating direct-current active power of the battery stacks based on a power balance principle and according to the first actual alternating-current power, the current remaining capacities, the direct-current voltages and the first constraint condition; and
calculating the alternating-current active power of each of the battery stacks according to the direct-current active power of the battery stacks and a working efficiency of each bidirectional energy storage converter.

3. The control method according to claim 2, wherein the first constraint condition is that a current remaining capacity of any battery stack and a reference ratio of the battery stack are in a positive correlation relationship; and the reference ratio is a ratio of the direct-current active power of the battery stack to the direct-current voltage.

4. The control method according to claim 3, wherein the calculating the direct-current active power of the battery stacks based on the power balance principle and according to the first actual alternating-current power, the current remaining capacities, the direct-current voltages and the first constraint condition comprises:
based on the current remaining capacity of any battery stack and the reference ratio of the battery stack in the positive correlation relationship, determining, according to a first relative ratio of the current remaining capacities among the respective battery stacks, a second relative ratio among the reference ratios of the respective battery stacks; and
calculating, based on the power balance principle and according to the second relative ratio among the reference ratios of the respective battery stacks, the first actual alternating-current power and the direct-current voltage of each bidirectional energy storage converter, the direct-current active power of each of the battery stacks.

5. The control method according to claim 4, wherein the calculating, based on the power balance principle and according to the second relative ratio among the reference ratios of the respective battery stacks, the first actual alternating-current power and the direct-current voltage of each bidirectional energy storage converter, the direct-current active power of each of the battery stacks comprises:
constructing a first matrix operation expression based on the power balance principle, wherein the second relative ratio among the reference ratios of the respective battery stacks, the first actual alternating-current power and the direct-current voltage of each bidirectional energy storage converter serve as known quantities, and the direct-current active power of each of the battery stacks serves as a variable to be solved; and
solving the first matrix operation expression to obtain the direct-current active power of each of the battery stacks.

6. The control method according to claim 5, wherein the first matrix operation expression comprises a first known matrix, a second known matrix and a first matrix to be solved; and the constructing the first matrix operation expression based on the power balance principle comprises:
constructing the first known matrix according to the second relative ratio among the reference ratios of the respective battery stacks, and the direct-current voltage and the working efficiency of each bidirectional energy storage converter;
constructing the second known matrix according to the first actual alternating-current power; and
constructing the first matrix to be solved according to the direct-current active power of each of the battery stacks,
wherein a product of the first known matrix and the first matrix to be solved is equal to the second known matrix.

7. The control method according to claim 2, wherein the calculating the alternating-current active power of each of the battery stacks according to the direct-current active power of the battery stacks and the working efficiency of each bidirectional energy storage converter comprises:
determining, according to the working efficiency of each bidirectional energy storage converter, a conversion ratio corresponding to the direct-current active power of the bidirectional energy storage converter; and
converting the direct-current active power of the bidirectional energy storage converter into the alternating-current active power of the battery stack according to the conversion ratio.

8. The control method according to claim 2, wherein the power balance principle is that a total power input of the battery energy storage system is equal to a total power output; the total power input is the first actual alternating-current power of all the battery stacks; and the total power output is a sum of the direct-current active powers of the individual battery stacks.

9. The control method according to claim 1, wherein the energy storage manager acquires the first actual alternating-current power of all the battery stacks in a following manner:
the energy storage manager acquires sub alternating-current power of each battery stack;
all the sub alternating-current powers are aggregated together to obtain a first total power of all the battery stacks; and
the first actual alternating-current power is obtained by performing actual loss-removal processing on the first total power.

10. The control method according to claim 1, wherein the bidirectional energy storage converter is further connected to other energy power supply systems; and
the energy storage manager calculates the alternating-current active power of each of the battery stacks in the following manner, comprising:
calculating, by the energy storage manager according to a preset second constraint condition and based on the acquired first actual alternating-current power, a second actual alternating-current power of other direct-current energy systems, the current remaining capacities and the direct-current voltages, the alternating-current active power of each of the battery stacks.

11. The control method according to claim 10, wherein the calculating, by the energy storage manager according to the preset second constraint condition and based on the acquired first actual alternating-current power, the second actual alternating-current power of other direct-current energy systems, the current remaining capacities and the direct-current voltages, the alternating-current active power of each of the battery stacks comprises:
calculating direct-current active power of the battery stacks based on a power balance principle and according to the first actual alternating-current power, the second actual alternating-current power, the current remaining capacities, the direct-current voltages, direct-current active power of each other direct-current energy system and the second constraint condition; and
calculating the alternating-current active power of each of the battery stacks according to the direct-current active power of the battery stacks and the working efficiency of each bidirectional energy storage converter.

12. The control method according to claim 11, wherein the second constraint condition is that a current remaining capacity of any battery stack and a reference difference of the battery stack are in a positive correlation relationship; the reference difference is a difference between a first ratio and a second ratio; and the first ratio is a ratio of the direct-current active power of the battery stack to the direct-current voltage, and the second ratio is a ratio of the direct-current active power of the other direct-current energy system to the direct-current voltage.

13. The control method according to claim 12, wherein the calculating the direct-current active power of the battery stacks based on the power balance principle and according to the first actual alternating-current power, the second actual alternating-current power, the current remaining capacities, the direct-current voltages, the direct-current active power of each other direct-current energy system and the second constraint condition comprises:
based on that the current remaining capacity of the battery stack and the reference difference of the battery stack in the positive correlation relationship, calculating, according to a first relative ratio among the current remaining capacities of the respective battery stacks, a third relative ratio among the reference differences of the respective battery stacks; and
calculating, based on the power balance principle and according to the third relative ratio, the first actual alternating-current power, the second actual alternating-current power, the direct-current active power of each other direct-current energy system and the direct-current voltage of each bidirectional energy storage converter, the direct-current active power of each of the battery stacks.

14. The control method according to claim 13, wherein the calculating, based on the power balance principle and according to the third relative ratio, the first actual alternating-current power, the second actual alternating-current power, the direct-current active power of each other direct-current energy system and the direct-current voltage of each bidirectional energy storage converter, the direct-current active power of each of the battery stacks comprises:
constructing a second matrix operation expression based on the power balance principle, wherein the third relative ratio, the first actual alternating-current power, the direct-current active power of each other direct-current energy system and the direct-current voltage of each bidirectional energy storage converter serve as known quantities, and the direct-current active power of each of the battery stacks serves as a variable to be solved; and
solving the second matrix operation expression to obtain the direct-current active power of each of the battery stacks.

15. The control method according to claim 14, wherein the second matrix operation expression comprises a third known matrix, a fourth known matrix and a second matrix to be solved; and the constructing the second matrix operation expression based on the power balance principle comprises:
constructing the third known matrix according to the third relative ratio among the reference differences of the respective battery stacks, and the direct-current voltage and the working efficiency of each bidirectional energy storage converter;
constructing the fourth known matrix according to the first actual alternating-current power, the second actual alternating-current power and the direct-current active power of each other direct-current energy system; and
constructing the second matrix to be solved according to the direct-current active power of each of the battery stacks and a direct-current active power of each other direct-current energy system,
wherein a product of the third known matrix and the second matrix to be solved is equal to the fourth known matrix.

16. The control method according to claim 11, wherein the calculating the alternating-current active power of each of the battery stacks according to the direct-current active power of the battery stacks and the working efficiency of each bidirectional energy storage converter comprises:
determining, according to the working efficiency of each bidirectional energy storage converter, a conversion ratio corresponding to the direct-current active power of the bidirectional energy storage converter; and
converting the direct-current active power of the bidirectional energy storage converter into the alternating-current active power of the battery stack according to the conversion ratio.

17. The control method according to claim 11, wherein the power balance principle is that a total power input of the battery energy storage system and the other energy power supply systems is equal to a total power output; and the total power input is the first actual alternating-current power of all the battery stacks and the second actual alternating-current power of the other energy power supply systems, and the total power input is a sum of the direct-current active power of each battery stack and the second actual alternating-current power of the other energy power supply systems.

18. The control method according to claim 1, wherein the target current distribution ratio is within a distribution ratio constraint interval, and the battery cluster parameter comprises at least one of following items: the current remaining capacity of the battery cluster, a capacity setting critical value, and the distribution ratio constraint interval set for each battery cluster and determined according to a total battery cluster quantity of a plurality of battery clusters connected in parallel in the battery energy storage system.

19. The control method according to claim 18, wherein the determining, according to the total battery cluster quantity of the plurality of battery clusters connected in parallel in the battery energy storage system, the distribution ratio constraint interval set for each battery cluster comprises:
under a condition that a system parameter of the battery energy storage system does not satisfy an equal current distribution condition, determining, according to the total battery cluster quantity of the plurality of battery clusters connected in parallel in the battery energy storage system, the distribution ratio constraint interval set for each battery cluster.

20. The control method according to claim 18, wherein the determining, according to the total battery cluster quantity of the plurality of battery clusters connected in parallel in the battery energy storage system, the distribution ratio constraint interval set for each battery cluster comprises:
acquiring the total battery cluster quantity of the plurality of battery clusters connected in parallel in the battery energy storage system and an overload constraint ratio of the battery energy storage system, wherein the overload constraint ratio represents a preset ratio by which current of a battery cluster in a charging or discharging process exceeds a rated current range; and
determining, according to the overload constraint ratio, an upper distribution ratio constraint limit and a lower distribution ratio constraint limit of the battery energy storage system, so as to determine the distribution ratio constraint interval set for each battery cluster.

21. The control method according to claim 1, wherein the battery cluster parameter comprises the current remaining capacity of the battery cluster and a capacity setting critical value, wherein the capacity setting critical value represents that states of charge of the respective battery clusters in the battery energy storage system converge to be consistent fastest; and
the determining, according to the battery cluster parameter, the target current distribution ratio set for each battery cluster comprises:
determining, according to the current remaining capacity of each battery cluster and the capacity setting critical value, a first to-be-adjusted current distribution ratio set for each battery cluster; and
determining the target current distribution ratio according to whether the first to-be-adjusted current distribution ratio is within the distribution ratio constraint interval.

22. The control method according to claim 1, wherein each battery cluster corresponds to one of the direct-current power converters, and each battery stack corresponds to one of the bidirectional energy storage converters, wherein the battery cluster and the direct-current power converter corresponding to the battery cluster are packaged together.

23. A control apparatus, **characterized in that** the control apparatus acts on a battery energy storage system, wherein the battery energy storage system comprises a plurality of battery stacks and an energy storage manager; each of the battery stacks comprises a bidirectional energy storage converter, a plurality of direct-current power converters and a plurality of battery clusters; each battery cluster is sequentially connected to an alternating-current power grid via the direct-current power converter and the bidirectional energy storage converter that correspond to the battery cluster; and the energy storage manager is in signal connection with each direct-current power converter and each bidirectional energy storage converter, respectively; and the control apparatus comprises:
a determination module, configured to determine, for each of the battery stacks, a target current distribution ratio set for each battery cluster according to a battery cluster parameter of each battery cluster in the battery stack;
an acquisition module, configured to acquire in real time current remaining capacities of the respective battery stacks, a first actual alternating-current power of all the battery stacks, and a direct-current voltage of each bidirectional energy storage converter;
a calculation module, configured to calculate, according to a preset first constraint condition and based on the acquired first actual alternating-current power, the current remaining capacities and the direct-current voltages, an alternating-current active power of each of the battery stacks; and
a control module, configured to issue the alternating-current active power to the corresponding bidirectional energy storage converter, so as to adjust a current distributed by each of the bidirectional energy storage converters, and control each of the direct-current power converters based on the target current distribution ratio, so as to adjust a current distributed to each battery cluster.

24. An electronic device, **characterized by** comprising: a processor, a memory and a bus, wherein the memory stores machine-readable instructions executable by the processor; when the electronic device runs, the processor communicates with the memory via the bus; and the machine-readable instructions, when executed by the processor, perform the steps of the control method according to any one of claims 1 to 22.

25. A computer-readable storage medium, **characterized in that** the computer-readable storage medium stores a computer program, and the computer program, when run by a processor, performs the steps of the control method according to any one of claims 1 to 22.
